(19) Europäisches Patentamt
European Patent Office
Office européen des brevets

(11) **EP 2 779 552 A1**

(12) **EUROPEAN PATENT APPLICATION**

(43) Date of publication:
**17.09.2014 Bulletin 2014/38**

(51) Int Cl.:
**H04L 25/06** (2006.01)

(21) Application number: **13159254.5**

(22) Date of filing: **14.03.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **BlackBerry Limited Waterloo, ON N2K 0A7 (CA)**

(72) Inventors:
• **The inventors have agreed to waive their entitlement to designation.**

(74) Representative: **Moore, Barry et al Hanna Moore & Curley 13 Lower Lad Lane Dublin 2 (IE)**

(54) **Computation of reliability values**

(57)     There are disclosed systems and methods for computing a reliability value for a bit of a received symbol value $y$ associated with a constellation. In one embodiment, the method comprises computing the reliability value by obtaining a first minimum distance value, the first minimum distance value being a function of an absolute magnitude of an initial value associated with the bit, and combining the first minimum distance value with a second minimum distance value, the second minimum distance value being a function of a distance between the received symbol value y and a symbol $x_b^{\hat{}}$ in the constellation corresponding to a most likely pattern of bits transmitted given the received symbol value $y$.

```
             ┌─────────┐
             │  Start  │
             └─────────┘
                  │
                  ▼
┌──────────────────────────────────────┐
│  Obtaining a first minimum distance   │
│  value, the first minimum distance    │
│  value being a function of an         │
│  absolute magnitude of an initial     │── 1502
│  value associated with the bit        │
└──────────────────────────────────────┘
                  │
                  ▼
┌──────────────────────────────────────┐
│  Combining the first minimum distance │
│  value with a second minimum distance │
│  value, the second minimum distance   │
│  value being a function of a distance  │── 1504
│  between the received symbol value $y$ │
│  and a symbol in the constellation     │
│  corresponding to a most likely pattern│
│  of bits transmitted given the received│
│  symbol value $y$                      │
└──────────────────────────────────────┘
                  │
                  ▼
             ┌─────────┐
             │   End   │
             └─────────┘
```

**FIG. 15**

EP 2 779 552 A1

**Description**

The following relates to the computation of one or more reliability values (such as log likelihood ratio values) in a digital communications system.

The receiver of a digital communications system typically includes a constellation demapper and a decoder. The constellation demapper demaps the received symbol to either one or more bits (a "hard decision") or one or more reliability values, each reliability value representing the likelihood that a transmitted bit is either a one or a zero. The output of the constellation demapper is then fed to the decoder, which uses the output of the constellation demapper and the known error control code applied by the transmitter to decode the bits that were transmitted.

A "soft-input" decoder is one that accepts reliability values as an input instead of hard bit values. For example, there are known soft-input decoders for decoding turbo codes and Low-Density Parity-Check (LDPC) codes. A soft-input Viterbi decoder is also known. In soft-input decoders, instead of accepting bits as an input to the decoder, such decoders accept reliability values, one reliability value corresponding to each transmitted bit. A reliability value typically provides more information than a hard decision bit. As an example, the sign of the reliability value may indicate which bit was more likely transmitted, and the amplitude of the reliability value may indicate how likely it was that the particular bit was transmitted.

An example of one type of reliability value is a Log Likelihood Ratio (LLR).

It is desirable to compute reliability values in a way that aims to reduce computational complexity and/or in a way that aims to reduce the time required to compute the reliability values.

In one aspect, there is provided a method of computing a reliability value for a bit of a received symbol value $y$ associated with a constellation; the method comprising: computing the reliability value by obtaining a first minimum distance value, the first minimum distance value being a function of an absolute magnitude of an initial value associated with the bit, and combining the first minimum distance value with a second minimum distance value, the second minimum distance value being a function of a distance between the received symbol value $y$ and a symbol $x_{\hat{b}}$ in the constellation corresponding to a most likely pattern of bits transmitted given the received symbol value $y$.

The second minimum distance value may optionally be equal to the distance between the received symbol value $y$ and the symbol $x_{\hat{b}}$ in the constellation corresponding to the most likely pattern of bits transmitted given the received symbol value $y$.

Combining the first minimum distance value with the second minimum distance value may optionally comprise either subtracting the first minimum distance value from the second minimum distance value or subtracting the second minimum distance value from the first minimum distance value.

The constellation may optionally comprise a set of constellation points having a minimum distance of $2d$ between a pair of the constellation points.

The first minimum distance value may optionally be equal to $d$ plus the absolute magnitude of the initial value.

The received symbol value $y$ may optionally represent m bits that were transmitted using a modulation scheme of the constellation.

The method may optionally further comprise: obtaining $m$ initial values $y_0, y_1, ..., y_{m-1}$ from the received symbol value $y$, one for each of *the m* bits, the initial value being a kth one, $y_k$, of the $m$ initial values.

The method may optionally further comprise computing the first minimum distance value as $d + |y_k|$, where $|y_k|$ is the absolute magnitude of the initial value.

The method may optionally further comprise computing the second minimum distance value as a value equal to the distance between the received symbol value $y$ and the symbol $x_{\hat{b}}$ in the constellation corresponding to the most likely pattern of bits transmitted given the received symbol value $y$.

The method may optionally further comprise computing $m$ reliability values, one of the $m$ reliability values being said reliability value.

The $m$ reliability values may optionally be computed by, for $i = 0, ..., m-1$, computing an ith reliability value including computing $d + |y_i|$ to obtain an ith first minimum distance value, and combining the ith first minimum distance value with the second minimum distance value.

The second minimum distance value may optionally be computed as $||y_{m-1}| - d|$.

The method may optionally further comprise obtaining a hard decision representing the most likely pattern of bits transmitted given the received symbol value $y$.

The method may optionally further comprise computing the second minimum distance value by directly computing the distance between the received symbol value $y$ and the symbol $x_{\hat{b}}$ in the constellation corresponding to the hard decision.

The initial values may optionally be soft-sliced values.

The constellation may optionally be either a Pulse Amplitude Modulation (PAM) constellation or a Quadrature Amplitude Modulation (QAM) constellation.

The one or more reliability values may optionally be Log Likelihood Ratio (LLR) value(s).

The LLR values for *i* bits may optionally be computed as:

$$L(b_i) = \frac{\min\limits_{\bar{b},b_i=1} |\, y - x_{\bar{b}}\,|^2 - \min\limits_{\bar{b},b_i=0} |\, y - x_{\bar{b}}\,|^2}{k},$$

wherein the $i^{th}$ first minimum distance value is used to compute one of $\min\limits_{\bar{b},b_i=1} |\, y - x_{\bar{b}}\,|$ and

$\min\limits_{\bar{b},b_i=0} |\, y - x_{\bar{b}}\,|$, and wherein the second minimum distance value is used to compute the other of

$\min\limits_{\bar{b},b_i=1} |\, y - x_{\bar{b}}\,|$ and $\min\limits_{\bar{b},b_i=0} |\, y - x_{\bar{b}}\,|$, and where $\bar{b}$ is a bit vector *of m* bits, $x_{\bar{b}}$ is a symbol in the constellation associated with the bit vector $\bar{b}$, $\bar{b}$, $b_i = 0$ is a set of all possible bit vectors whose $i^{th}$ bit is 0, $\bar{b}$, $b_i = 1$ is a

set of all possible bit vectors whose $i^{th}$ bit is 1, *k* is a scaling factor, $|\, y - x_{\bar{b}}\,|$ represents the absolute value of the difference between the received symbol value *y* and the symbol $x_{\bar{b}}$, $\min\limits_{\bar{b},b_i=1} |\, y - x_{\bar{b}}\,|$ is a minimum of the set of

values for $|\, y - x_{\bar{b}}\,|$ $\bar{b}$, $b_i = 1$, and $\min\limits_{\bar{b},b_i=0} |\, y - x_{\bar{b}}\,|$ is a minimum of the set of values $|\, y - x_{\bar{b}}\,|$ for $\bar{b}$, $b_i = 0$.

Gray coding may optionally be used in the constellation.
Natural coding may optionally be used in the constellation.
Obtaining m initial values $y_0, y_1, ..., y_{m-1}$ from the received symbol value *y* may optionally comprise: selecting the received symbol value *y* as a first initial value $y_0$; and for *k* = 1,..., *m-1*, computing a $k^{th}$ initial value, $y_k$, as

$$y_k = 2^{m-k} d - |\, y_{k-1}\,|.$$

Obtaining *m* initial values $y_0, y_1, ..., y_{m-1}$ from the received symbol value *y* may optionally comprise: selecting the received symbol value *y* as a first initial value $y_0$; and for *k* =1,...,*m*-1, computing a $k^{th}$ initial value, $y_k$, as

$$y_k = \begin{cases} y_{k-1} - 2^{m-k} d, & y_{k-1} \geq 0 \\ y_{k-1} + 2^{m-k} d, & y_{k-1} < 0 \end{cases}.$$

The constellation may optionally be square QAM or rectangular QAM.
The reliability value(s) may optionally be computed as part of demapping.
Demapping may optionally be performed by decomposing the QAM constellation into two independent PAM constellations representing an in-phase and a quadrature-phase signal respectively, and independently demapping each of the two independent PAM constellations.
The method may optionally further comprise: receiving a wireless signal from a wireless channel; and obtaining the received symbol value *y* from the wireless signal.
The method may optionally further comprise performing decoding using the *m* reliability values.
The most likely pattern of bits transmitted given the received symbol value *y* may optionally be the hard decision of the received symbol value *y.*
The method may optionally comprise:

when $y_i \geq 0$, then $\min\limits_{\vec{b}, b_i=0} \left| y - x_{\vec{b}} \right|$ is computed as the second minimum distance value, and

$\min\limits_{\vec{b}, b_i=1} \left| y - x_{\vec{b}} \right|$ is computed as the i$^{th}$ first minimum distance value d+$|y_i|$ ;

else *when* $y_i$ < 0, then $\min\limits_{\vec{b}, b_i=0} \left| y - x_{\vec{b}} \right|$ is computed as the i$^{th}$ first minimum distance value *d*+ $|y_i|$ and

$\min\limits_{\vec{b}, b_i=1} \left| y - x_{\vec{b}} \right|$ is computed as the second minimum distance value.

The second minimum distance value may optionally represent a minimum of a set comprising the distances between the received symbol value *y* and all points in the constellation having an associated bit pattern in which a given bit equals the corresponding bit in a hard decision associated with the received symbol value *y.*

The first minimum distance value may optionally represent a minimum of a set comprising the distances between the received symbol value *y* and all points in the constellation having an associated bit pattern in which the i$^{th}$ bit does not equal the i$^{th}$ bit of the hard decision.

The value *d* may optionally be a function of the received energy per bit, or vice versa.

The method may optionally further comprise performing the demapping for a plurality of received symbols, and decoding the plurality of received symbols using the reliability values as inputs to a soft-input decoder.

The demapping may optionally be performed at the receiving end of a device (e.g. a mobile device).

In another aspect, there is provided an apparatus in a digital communications system, the apparatus comprising a constellation demapper for computing a reliability value for a bit of a received symbol value *y* associated with a constellation; the constellation demapper for performing operations comprising: computing the reliability value by obtaining a first minimum distance value, the first minimum distance value being a function of an absolute magnitude of an initial value associated with the bit, and combining the first minimum distance value with a second minimum distance value, the second minimum distance value being a function of a distance between the received symbol value *y* and a symbol $x_{\vec{b}}^{\wedge}$ in the constellation corresponding to a most likely pattern of bits transmitted given the received symbol value *y.*

The apparatus may optionally be configured to perform any of the additional steps in the methods described above and herein.

The apparatus may optionally further include a decoder for decoding using reliability values computed by the demapper.

The apparatus may optionally further include a receiver for receiving a signal from a channel.

The apparatus may optionally further include processing circuitry for obtaining the received symbol value from the received signal.

The apparatus may optionally be part of a mobile device.

In another aspect, there is provided a computer readable medium having stored thereon computer executable instructions that, when executed, cause an apparatus to perform a method of computing a reliability value for a bit of a received symbol value *y* associated with a constellation; the instructions, when executed, causing the apparatus to perform operations comprising: computing the reliability value by obtaining a first minimum distance value, the first minimum distance value being a function of an absolute magnitude of an initial value associated with the bit, and combining the first minimum distance value with a second minimum distance value, the second minimum distance value being a function of a distance between the received symbol value *y* and a symbol $x_{\vec{b}}^{\wedge}$ in the constellation corresponding to a most likely pattern of bits transmitted given the received symbol value *y.*

The computer executable instructions, when executed, may optionally cause the apparatus to perform any of the additional steps in the methods described above and herein.

In another aspect, there is provided a method of demapping a received symbol value *y* associated with a constellation, the constellation comprising a set of constellation points having a minimum distance of 2*d* between a pair of the constellation points; the received symbol value *y* representing *m* bits that were transmitted using a modulation scheme of the constellation; the method comprising: demapping the received symbol value *y* by: obtaining *m* initial values $y_0, y_1,...,y_{m-1}$ from the received symbol value *y* , one for each of *the m* bits; computing *m* reliability values by, for *i = 0,..., m-1,* computing an i$^{th}$ reliability value including computing *d*+ $|y_i|$ to obtain an i$^{th}$ minimum distance value, where $|y_i|$ is an absolute magnitude of the initial value associated with an i$^{th}$ bit of the *m* bits, and combining the i$^{th}$ minimum distance value with another minimum distance value equal to a distance between the received symbol value *y* and a

symbol $x_b^{\wedge}$ in the constellation corresponding to a most likely pattern of bits transmitted given the received symbol value $y$.

The initial values may optionally be soft sliced values.

The most likely pattern of bits transmitted given the received symbol value $y$ may optionally be the hard decision of the received symbol value $y$.

Combining the $i^{th}$ minimum distance value with the other minimum distance value may optionally comprise either subtracting the $i^{th}$ minimum distance value from the other minimum distance value or subtracting the other minimum distance value from the $i^{th}$ minimum distance value.

The other minimum distance value may optionally be computed as $||y_{m-1}|-d|$.

The method may optionally further comprise obtaining a hard decision representing the most likely pattern of bits transmitted given the received symbol value $y$.

The method may optionally further comprise computing the other minimum distance value by directly computing the distance between the received symbol value $y$ and the symbol $x_b^{\wedge}$ in the constellation corresponding to the hard decision.

The constellation may optionally be a Pulse Amplitude Modulation (PAM) constellation.

The constellation may optionally be a Quadrature Amplitude Modulation (QAM) constellation.

Gray coding may optionally be used in the constellation.

Natural coding may optionally be used in the constellation.

The reliability values may optionally be Log Likelihood Ratio (LLR) values.

Each one of the $m$ reliability values may optionally be Log Likelihood Ratio (LLR) values computed as:

$$L(b_i) = \frac{\min\limits_{\bar{b},b_i=1}|y-x_{\bar{b}}|^2 - \min\limits_{\bar{b},b_i=0}|y-x_{\bar{b}}|^2}{k},$$

wherein the $i^{th}$ minimum distance value is used to compute one of $\min\limits_{\bar{b},b_i=1}|y-x_{\bar{b}}|$ and $\min\limits_{\bar{b},b_i=0}|y-x_{\bar{b}}|$, and wherein the other minimum distance value is used to compute the other of $\min\limits_{\bar{b},b_i=1}|y-x_{\bar{b}}|$ and $\min\limits_{\bar{b},b_i=0}|y-x_{\bar{b}}|$, and where $\bar{b}$ is a bit vector *of m* bits, $x_{\bar{b}}$ is a symbol in the constellation associated with the bit vector $\bar{b}$, $\bar{b},b_i=0$ is a set of all possible bit vectors whose $i^{th}$ bit is 0, $\bar{b},b_i=1$ is a set of all possible bit vectors whose $i^{th}$ bit is 1, $k$ is a scaling factor, $|y-x_{\bar{b}}|$ represents the absolute value of the difference between the received symbol value $y$ and the symbol $x_{\bar{b}}$, $\min\limits_{\bar{b},b_i=1}|y-x_{\bar{b}}|$ is a minimum of the set of values $|y-x_{\bar{b}}|$ for $\bar{b},b_i=1$, and $\min\limits_{\bar{b},b_i=0}|y-x_{\bar{b}}|$ is a minimum of the set of values $|y-x_{\bar{b}}|$ for $\bar{b},b_i=1$,

The scaling factor $k$ may optionally be equal to one.

The scaling factor $k$ may optionally be equal to another real number.

The scaling factor $k$ may optionally be equal to $2\sigma^2$, where $\sigma$ is a standard deviation of a Gaussian distribution of noise.

The method may optionally comprise:

when $y_i \geq 0$, then $\min\limits_{\bar{b},b_i=0}|y-x_{\bar{b}}|$ is computed as the other mimimum distance value, and

$\min\limits_{\bar{b},b_i=1}|y-x_{\bar{b}}|$ is computed as the $i^{th}$ mimimum distance value $d+|y_i|$;

else when $y_i < 0$, then $\min\limits_{\vec{b}, b_i=0} \left| y - x_{\vec{b}} \right|$ is computed as the $i^{th}$ mimimum distance value $d+|y_i|$ and

$\min\limits_{\vec{b}, b_i=1} \left| y - x_{\vec{b}} \right|$ is computed as the other mimimum distance value.

Obtaining m initial values $y_0$, $y_1$,...,$y_{m-1}$ from the received symbol value $y$ may optionally comprise: selecting the received symbol value $y$ as a first initial value $y_0$; for $k =1,...,m-1$, computing a $k^{th}$ initial value, $y_k$, as $y_k = 2^{m-k} d- |y_{k-1}|$.

Obtaining m initial values $y_0$, $y_1$,...,$y_{m-1}$ from the received symbol value $y$ may optionally comprise: selecting the received symbol value $y$ as a first initial value $y_0$; for $k = 1,...,m-1$, computing a $k^{th}$ initial value, $y_k$, as

$$y_k = \begin{cases} y_{k-1} - 2^{m-k}d, & y_{k-1} \geq 0 \\ y_{k-1} + 2^{m-k}d, & y_{k-1} < 0 \end{cases}.$$

The constellation may optionally be square QAM or rectangular QAM.

The demapping may optionally be performed by decomposing the QAM constellation into two independent PAM constellations representing an in-phase and a quadrature-phase signal respectively, and independently demapping each of the two independent PAM constellations.

The method may optionally further comprise: receiving a wireless signal from a wireless channel; and obtaining the received symbol value $y$ from the wireless signal.

The method may optionally further comprise performing decoding using the m reliability values.

The other minimum distance value may optionally represent a minimum of a set comprising the distances between the received symbol value $y$ and all points in the constellation having an associated bit pattern in which a given bit equals the corresponding bit in a hard decision associated with the received symbol value $y$.

The minimum distance value $d+ |y_i|$ may optionally represent a minimum of a set comprising the distances between the received symbol value $y$ and all points in the constellation having an associated bit pattern in which the $i^{th}$ bit does not equal the $i^{th}$ bit of the hard decision.

The value $d$ may optionally be a function of the received energy per bit, or vice versa.

The method may optionally further comprise performing the demapping for a plurality of received symbols, and decoding the plurality of received symbols using the reliability values as inputs to a soft-input decoder.

The demapping may optionally be performed at the receiving end of a device (e.g. a mobile device).

In another aspect, there is provided an apparatus in a digital communications system, the apparatus comprising a constellation demapper for demapping a received symbol value $y$ associated with a constellation, the constellation comprising a set of constellation points having a minimum distance of $2d$ between a pair of the constellation points; the received symbol value $y$ representing $m$ bits that were transmitted using a modulation scheme of the constellation; the constellation demapper for demapping the received symbol value $y$ by: obtaining $m$ initial values $y_0$, $y_1$,...,$y_{m-1}$ from the received symbol value $y$, one for each of the $m$ bits; computing $m$ reliability values by, for $i = 0,...,m-1$, computing an $i^{th}$ reliability value including computing $d+ |y_i|$ to obtain an $i^{th}$ minimum distance value, where $|y_i|$ is an absolute magnitude of the initial value associated with an $i^{th}$ bit of the m bits, and combining the $i^{th}$ minimum distance value with another minimum distance value equal to a distance between the received symbol value $y$ and a symbol $x_{\hat{b}}$ in the constellation corresponding to a most likely pattern of bits transmitted given the received symbol value $y$.

The apparatus may optionally be configured to perform any of the additional steps in the methods described above and herein.

The apparatus may optionally further include a decoder for decoding using the reliability values computed by the demapper.

The apparatus may optionally further include a receiver for receiving a signal from a channel.

The apparatus may optionally further include processing circuitry for obtaining the received symbol value from the received signal.

The apparatus may optionally be part of a mobile device.

In another aspect, there is provided a computer readable medium having stored thereon computer executable instructions that, when executed, cause an apparatus to perform a method of demapping a received symbol value $y$ associated with a constellation, the constellation comprising a set of constellation points having a minimum distance of

$2d$ between a pair of the constellation points; the received symbol value $y$ representing $m$ bits that were transmitted using a modulation scheme of the constellation; the instructions, when executed, causing the apparatus to perform operations comprising: demapping the received symbol value $y$ by: obtaining $m$ initial values $y_0, y_1,...,y_{m-1}$ from the received symbol value $y$, one for each of the $m$ bits; computing $m$ reliability values by, for $i = 0,..., m-1$, computing an $i^{th}$ reliability value including computing $d + |y_i|$ to obtain an $i^{th}$ minimum distance value, where $|y_i|$ is an absolute magnitude of the initial value associated with an $i^{th}$ bit of the $m$ bits, and combining the $i^{th}$ minimum distance value with another minimum distance value equal to a distance between the received symbol value $y$ and a symbol $x_{\hat{b}}$ in the constellation corresponding to a most likely pattern of bits transmitted given the received symbol value $y$.

The computer executable instructions, when executed, may optionally cause the apparatus to perform any of the additional steps in the methods described above and herein.

Specific embodiments will now be described, by way of example only, with reference to the accompanying figures wherein:

FIG. 1 is a block diagram of a transmit side and a receive side in a digital communications system;

FIGs. 2 and 3 illustrate an example of Gray coded and natural-coded 8-PAM constellations, respectively;

FIG. 4 illustrates an example of a Gray coded 16-QAM constellation;

FIG. 5 is another block diagram of a digital communications system;

FIG. 6 is an example of a method of soft slicing the Gray coded 8-PAM constellation of FIG. 2;

FIG. 7 is a flow diagram illustrating a method of computing LLR values;

FIG. 8 is a flow diagram illustrating another method of computing LLR values;

FIG. 9 is a flow diagram illustrating still another method of computing LLR values;

FIG. 10 illustrates an example of a natural coded 8-PAM constellation;

FIG. 11 is an example of a method of soft slicing the natural-coded 8-PAM constellation of FIG. 10;

FIG. 12 illustrates an example of a Gray coded 64-QAM constellation;

FIG. 13 is a block diagram of a QAM constellation mapper and demapper;

FIG. 14 is a flow diagram illustrating a method of computing one or more reliability values;

FIG. 15 is a flow diagram illustrating a method of computing a reliability value;

FIG. 16 is a block diagram of an apparatus; and

FIG. 17 is a block diagram of a mobile device.

Like reference numerals are used in different figures to denote similar elements.

The embodiments set forth herein represent the necessary information to practice the claimed subject matter and illustrate the best way of practicing such subject matter. Upon reading the following description in light of the accompanying figures, those of sufficient skill will understand the concepts of the claimed subject matter and will recognize applications of these concepts not particularly addressed herein. It should be understood that these concepts and applications fall within the scope of the disclosure and the accompanying claims.

Moreover, it will be appreciated that any module, component, or device exemplified herein that executes instructions may include or otherwise have access to a computer/processor readable storage medium or media for storage of information, such as computer/processor readable instructions, data structures, program modules, or other data. A non-exhaustive list of examples of computer/processor readable storage media include magnetic cassettes, magnetic tape, magnetic disk storage or other magnetic storage devices, optical disks such as CD-ROM, DVDs, Blu-ray, or other optical storage, volatile and non-volatile, removable and non-removable media implemented in any method or technology, RAM, ROM, EEPROM, flash memory or other memory technology. Any such computer/processor storage media may be part of a device or accessible or connectable thereto. Any application or module herein described may be implemented using computer/processor readable/executable instructions that may be stored or otherwise held by such computer/processor readable storage media.

In general, there are disclosed below systems and methods in which at least one reliability value is computed for at least one of $m$ bits transmitted via a received symbol value $y$.

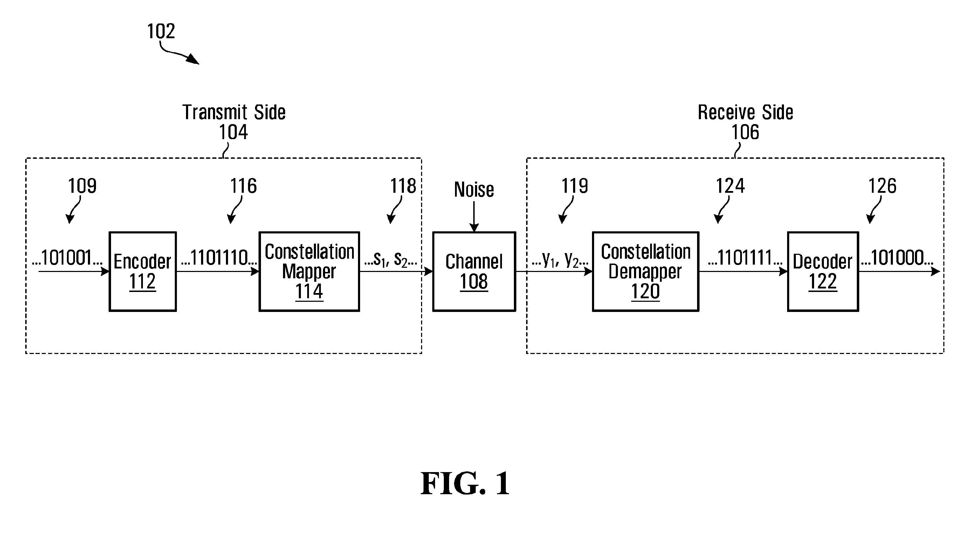

Turning to FIG. 1, a digital communications system 102 is illustrated. The digital communications system 102 comprises a transmit side 104 and a receive side 106, separated by a channel 108. For example, the transmit side 104 may comprise a transmitter, and the receive side 106 may comprise a receiver. It is desired to transmit a stream of binary digits 109 ("bits") from the transmit side 104 to the receive side 106. Typically, the channel 108 cannot support the literal propagation of a stream of bits directly (i.e. the channel medium cannot literally carry digital 1's and 0's). Instead, the bits 109 need to be mapped or modulated onto corresponding waveforms that can propagate through the channel 108. Additionally, the channel 108 will typically be noisy and will therefore corrupt the transmitted signals, such that there is uncertainty at the receive side 106 as to what was actually transmitted. The receive side 106 therefore needs to make a "guess" or decision as to what was transmitted. Making an incorrect guess/decision will result in bit errors at the receive side 106.

To address the challenges mentioned above, the transmit side 104 includes an encoder 112 and a constellation mapper 114. The encoder 112 performs error control coding. Specifically, the encoder 112 encodes the bits 109 to be transmitted so that redundancy is strategically added. This redundancy is then exploited on the receive side 106 to try and identify and/or correct errors introduced by the noise in the channel 108. Error control coding and error control codes are well known in the art. Examples of error control codes include linear block codes, cyclic codes, convolutional codes, and turbo codes.

Thus, the output of the encoder 112 is a stream of encoded bits 116, which consist of the stream of bits 109 encoded using an error control code.

The constellation mapper 114 sequentially maps groups of encoded bits 116 to corresponding symbols, which are ultimately mapped to waveforms that are suitable for transmission over the channel 108. The output of the constellation mapper 114 is therefore a stream of symbols 118. Each symbol corresponds to a specific group of bits, and each symbol can be represented as vectors or values in a signal constellation. The mapping of bits to symbols is what is typically referred to as modulation mapping.

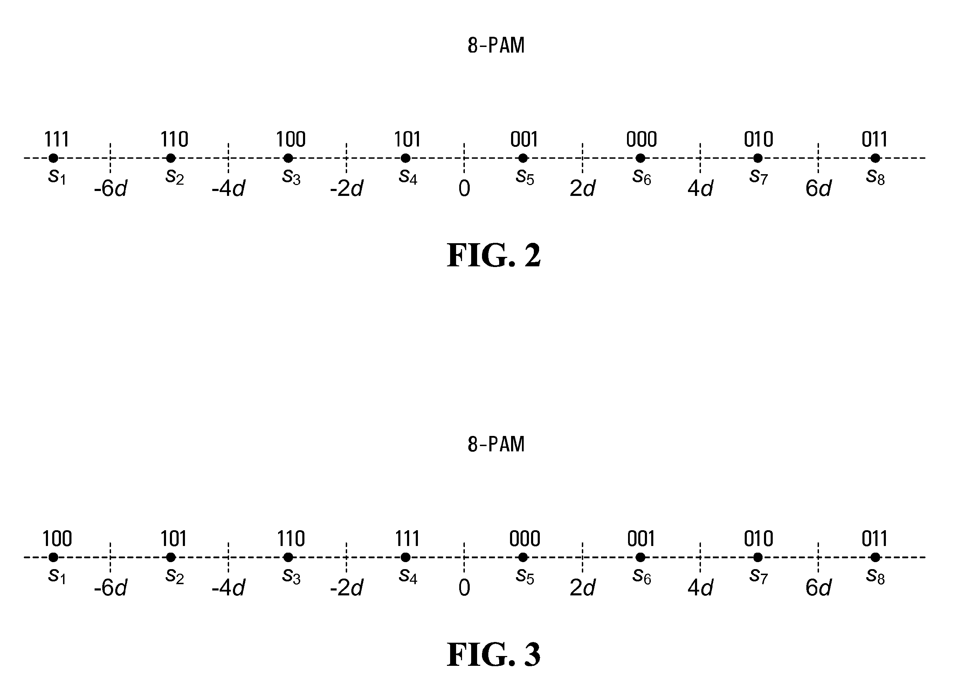

For example, FIG. 2 illustrates a signal constellation for Pulse Amplitude Modulation (PAM) in which groups of 3 bits are each mapped to one of 8 corresponding symbols ($s_1$ to $s_8$), each symbol corresponding to a particular permutation or pattern of bits. This modulation scheme is referred to as 8-PAM modulation. In this modulation scheme, the amplitude of the signal is representative of the specific pattern of 3 bits that are being transmitted. There are 8 possible symbols $s_1$ to $s_8$, each one representing a unique pattern of 3-bit values. In this example, if the constellation mapper 114 receives as its input "111", then it will transmit symbol $s_1$, which has a value of -7$d$ in the constellation. The value "-7$d$" relates to the energy of the transmitted bits. For example, it may correspond to (or be a function of) the amplitude of an actual transmitted signal. As an example, the value "$d$" may correspond to (or be a function of) the energy of a baseband signal, which is further amplified depending upon what symbol is being transmitted. The value $d$ also relates to the distance between a pair of adjacent constellation points. In the constellation of FIG.2, there is a distance of 2$d$ between adjacent constellation points.

As another example, if the constellation mapper 114 receives as its input "001 ", then it will transmit symbol $s_5$ , which has a value of $d$ in the constellation.

In this way, the constellation mapper 114 can receive a continual or a continuous stream of encoded bits 116 and map and transmit over the channel 108 a corresponding stream of symbols 118, each symbol corresponding to a group of 3 bits.

The specific way in which bit patterns are mapped to symbols is configurable. For example, the bit-to-symbol mapping shown in FIG. 2 is referred to as "Gray coding". Gray coding is when two adjacent values only differ by one bit. As can be seen in the constellation in FIG. 2, each pair of adjacent symbols represents a pair of adjacent bit patterns that only differ by one bit. Using Gray coding has been shown to help reduce the overall bit error rate in systems in which the channel 108 includes noise that can be modelled as additive white Gaussian noise (AWGN). However, Gray coding is not the only way to map bit patterns to symbols in the constellation. For example, the 8-PAM signal constellation shown in FIG. 3 maps the bit patterns to symbols using a different arrangement.

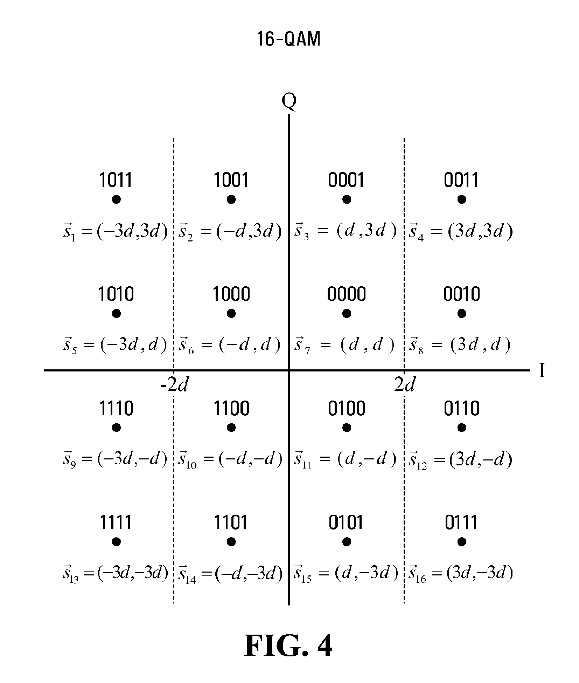

FIG. 4 illustrates a signal constellation for Quadrature Amplitude Modulation (QAM) in which groups of 4 bits are each mapped to one of 16 corresponding symbols. This is referred to as 16-QAM. In this modulation scheme, typically both the amplitude and the phase of each signal being transmitted is representative of the specific pattern of 4 bits that are being transmitted. In this example 16-QAM scheme, Gray coding is used for mapping the bit patterns to the symbols. As will be appreciated, this is not the only Gray coding mapping available for this constellation, but is only one example.

In a constellation, each symbol is represented by a value in the constellation. For example, the symbol $\vec{s}_1$ in

the 16-QAM constellation shown in FIG. 4 is represented by the two dimensional value *(-3d, 3d)*. With respect to the 8-PAM constellations shown in FIGs. 2 and 3, these are only one dimensional constellations, and so each symbol is simply just a single value.

It will be appreciated that the PAM and QAM constellations illustrated in FIGs. 2 to 4 are just examples. Many different constellations are known and can instead be used.

Returning now to FIG. 1, the receive side 106 of the data communications system 102 includes a constellation demapper 120 and a decoder 122. The constellation demapper 120 demaps the received symbols 119, which have been corrupted by noise, to either bits (a "hard decision") or reliability values representing the likelihood that each transmitted bit is either a one or a zero. In any case, the output of the constellation demapper 120 is then fed to the decoder 122, which uses the output of the constellation demapper 120 and the known error control code applied by the encoder 112 to decode the stream of bits that were sent by the transmit side 104.

As an example, assume the 8-PAM constellation in FIG. 2, and assume that the group of bits "001" is transmitted via symbol $s_5 = d$. Of course, as discussed above, the value $d$ is not literally sent across the channel medium, but an appropriate and predetermined corresponding signal is transmitted. This transmitted signal is corrupted by the noise in the channel medium. The received signal then goes through signal processing known in the art (and not shown), such as through a matched filter and is sampled to result in a corresponding received value $y$. Assuming hard decision constellation demapping, the value $y$ may then be demapped by the constellation demapper 120 back to a corresponding bit pattern ("the hard decision"), i.e., ideally back to "001" if the noise in the channel 108 did not corrupt the signal too much during transmission. The stream 124 of demapped values output from the constellation demapper 120 is then fed to the decoder 122, which decodes the stream 124 back to a stream of bits 126 (via the predetermined error control coding method), which represents the decision of the receive side 106. That is, the stream of bits 126 represents the decision as to the corresponding stream of bits 109 that were transmitted from the transmit side 104.

It should be noted that the illustrated data communications system 102 has been simplified for ease of explanation. In actual implementation, the transmit side 104 and the receive side 106 will typically include many more components that are known in the art and that may be related to the transmission of the data, depending upon the specific implementation. Examples of such components include (but are not limited to): source coders/decoders, encryption/decryption, interleaving/deinterleaving, digital signal processing, filtering, OFDM modulation/demodulation, spreading/despreading, scrambling/descrambling, and mapping to/from subbands. As one specific example, to try and combat bursts of noise in the channel, the encoded bits 116 may be interleaved prior to constellation mapping, and then the demapped values may be deinterleaved prior to decoding 122.

Also, the channel 108 can include both the actual transmission medium (e.g. air or cable) through which an analog signal propagates, as well as the analog-to-digital (A/D) conversion and any related amplification, filtering or digital signal processing. In this case, the noise can include both noise in the actual transmission medium and noise introduced in the A/D conversion and any related filtering or digital signal processing at the receive side and/or the transmit side.

Returning now to FIG. 1, depending upon the error control scheme utilized, the decoder 122 may accept reliability values as an input instead of bit values (in which case the output of the constellation demapper 120 would not be bits 124, as illustrated, but would be reliability values corresponding to bits 124). Such a decoder is referred to as a "soft-input" decoder. For example, there are known soft-input decoders for decoding turbo codes and Low-Density Parity-Check (LDPC) codes. A soft-input Viterbi decoder is also known. Instead of accepting digital bits as an input to the decoder, a soft-input decoder accepts reliability values, one reliability value corresponding to each bit transmitted via the transmitted symbol. A reliability value can provide more information since it not only indicates which bit was more likely transmitted, but additionally the amplitude of the reliability value can indicate how likely it was that the particular bit was transmitted. As a simple example, assume the 8-PAM constellation in FIG. 2, and assume that the group of bits "001" is transmitted via symbol $s_5 = d$. The corresponding received value $y$ is received and processed by the constellation demapper 120. Instead of the constellation demapper 120 outputting the 3-bit hard decision value representing the guess/decision of what was sent (e.g. the value "001" if there was not much corruption of the signal during transmission), the constellation demapper 120 instead outputs 3 reliability values, one for each bit. As one example, each reliability value may indicate through its sign whether the bit sent was likely a "0" or a "1", and each reliability value may indicate through its absolute value how likely it was that that particular bit was sent. For example: (i) a large negative value may indicate that it was very likely that a "1" was sent; (ii) a small negative value may indicate that it was more likely than not that a "1" was sent, but there is significant uncertainty; (iii) a small positive value may indicate that it was more likely than not that a "0" was sent, but there is significant uncertainty; and (iv) a large positive value may indicate that it was very likely that a "0" was sent. These reliability values are then used by the soft-input decoder to perform error control decoding.

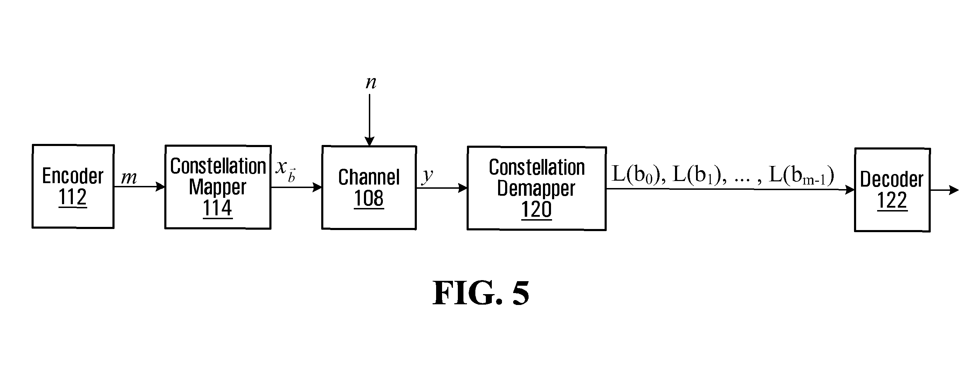

An example of one type of reliability value is a Log Likelihood Ratio (LLR). The LLR for each bit may be computed as follows, with reference to FIG. 5.

FIG. 5 is an example embodiment of the digital communications system of FIG. 1, with the assumption that the decoder 122 is a soft-input decoder that accepts as its input LLR values. The LLR values are output from the constellation demapper 120.

In this example embodiment, assume for simplicity that PAM is being used in the constellation mapper 114 to map each group of $m$ bits to a symbol $x_{\vec{b}}$ in a $2^m$-PAM constellation. Therefore, for each received symbol value $y$, the constellation demapper 120 outputs $m$ LLR values, i.e., one LLR value for each bit represented by the received symbol value $y$.

Assume also that the symbol $x_{\vec{b}}$ is corrupted by additive noise $n$. Therefore, the received symbol value is:

$$y = x_{\vec{b}} + n \, .$$

Of course, the transmitted symbol $x_{\vec{b}}$ may be corrupted by multiplicative noise (e.g. fading in a channel), but it is assumed that this is compensated for via known signal processing (e.g. equalizing). Therefore, the additive noise $n$ may represent additive noise in the channel medium and/or additive noise added through the filtering and signal processing (e.g. added through imperfect A/D conversion, equalization, etc.). As one example, the additive noise $n$ may be or include the estimation error of the estimated symbol after channel equalization.

The LLR for each bit of the m bits transmitted via the symbol $x_{\vec{b}}$ can be computed as follows:

$$L(b_i) = \ln \frac{P(b_i = 0 \mid y)}{P(b_i = 1 \mid y)} \, , \ i = 0,...,m-1$$

That is, the LLR $L(b_i)$ for an $i^{th}$ bit of the $m$ bits transmitted via the symbol $x_{\vec{b}}$ is computed by:

(a) computing the conditional probability that the bit equals zero given the received value $y$ (i.e. computing $P(b_i = 0 \mid y)$),
(b) computing the conditional probability that the bit equals one given the received value $y$ (i.e. computing $P(b_i = 1 \mid y)$), and
(c) dividing (a) by (b), and then computing the natural logarithm of this value.

With such a computation, the sign of $L(b_i)$ will represent which bit was more likely to have been transmitted ("0" or "1"), and the absolute magnitude of $L(b_i)$ will represent how likely it was that that particular bit was transmitted.

It is desired to compute the LLR $L(b_i)$ for each of *the m* bits in a way that is practical and does not use up too many computational resources.

Assuming each bit is equally likely to be transmitted and that the noise $n$ of the channel can be modelled as additive white Gaussian noise (AWGN), then the computation of the LLR $L(b_i)$ for each bit of the transmitted symbol can be reduced to:

$$L(b_i) = \ln \frac{\sum_{\vec{b},b_i=0} P(y \mid \vec{b})}{\sum_{\vec{b},b_i=1} P(y \mid \vec{b})} = \ln \frac{\sum_{\vec{b},b_i=0} \exp\left(-\frac{\mid y - x_{\vec{b}} \mid^2}{2\sigma^2}\right)}{\sum_{\vec{b},b_i=1} \exp\left(-\frac{\mid y - x_{\vec{b}} \mid^2}{2\sigma^2}\right)} \, , \ i = 0,...,m-1 \quad \text{(equation 1),}$$

where b is a group *of m* bits (the "bit vector"), and $x_{\vec{b}}$ is the symbol associated with the bit vector $\bar{b}$. The notation $\bar{b}, b_i = 0$ is the set of all possible bit vectors whose $i^{th}$ bit is 0. Similarly, the notation $b, b_i = 1$ is the set of all possible bit vectors whose $i^{th}$ bit is 1. Finally, the symbol $\sigma$ is the standard deviation of the Gaussian distribution of the noise $n$.

Computing equation (1) is often impractical since it involves too many computational resources and/or too much time. This is because equation (1) typically needs to be computed by brute force (exhaustive search). Also, the exponentials and logarithms are typically computationally intensive. In view of this, the following approximation is often used:

$$\ln\left(\sum_i e^{x_i}\right) \approx \max_i x_i,$$

which simplifies the computation of the LLR to:

$$L(b_i) = \frac{\min_{\vec{b}, b_i=1} |y - x_{\vec{b}}|^2 - \min_{\vec{b}, b_i=0} |y - x_{\vec{b}}|^2}{2\sigma^2}, i = 0,...,m-1 \quad \text{(equation 2)}.$$

Computing equation (2) is referred to as the Max-Log-MAP LLR calculation.

Computing equation (2) may require fewer computational resources than computing equation (1). However, assuming that equation (2) is computed using an exhaustive search (brute force method), it can still involve a lot of computational resources, especially when the number of bits per symbol (i.e. $m$) is large. In particular, the complexity involves $O(m2^m)$ subtractions for PAM and $O(m2^{m/2})$ subtractions for QAM.

It is possible to develop methods for computing equation (2) using further approximations that sacrifice accuracy for a reduction in complexity. However, such methods are undesirable because they introduce further LLR distortion. It is therefore desired to compute the LLR of equation (2) in a way in which complexity can be reduced, but not at the expense of sacrificing accuracy of the calculation of equation (2) (i.e. not at the expense of introducing further LLR distortion). Embodiments for computing the LLR that may have such benefits are disclosed below.

Returning to FIG. 5, the received symbol value $y$ is used by the constellation demapper 120 to obtain an LLR value for each of the $m$ bits corresponding to $y$. To help compute the LLR values, the received symbol value $y$ may be "soft sliced" into $m$ values, one for each of *the $m$* bits represented by the value *y.* These soft sliced values can then be used to obtain the LLR for each of the $m$ bits.

"Soft slicing" a received value $y$ refers to a method of deriving $m$ values from the received value $y$ in a way that facilitates computation of a reliability value (such as the LLR) for each of the $m$ bits using the soft sliced values. Typically, the soft slicing is also performed in a way that is intuitively meaningful.

Assuming a $2^m$-PAM constellation having a distance of $2d$ between adjacent constellation points, and using a Gray coding scheme along the lines of that shown in FIG. 2, then one way of soft slicing the received value $y$ is as follows:

$$y_0 = y,$$

$$y_i = 2^{m-i}d - |y_{i-1}|, i = 1,...,m-1$$

where $y_i$ is the $i^{th}$ soft sliced value (sometimes called the $i^{th}$ "soft sliced bit"). As discussed below, soft slicing in this way can make computation of the LLR in equation (2) simpler. This soft slicing technique is also intuitively meaningful as follows. To obtain each soft sliced value $y_i$, the PAM constellation can be "folded-and-overlapped". That is, a "fold-and-overlap" approach can be taken. Specifically, in order to obtain the $i^{th}$ coordinate axis for slicing the soft value $y_i$, the right half of the $(i-1)^{th}$ coordinate axis is folded and overlapped with the left half. The origin, i.e. the decision boundary, is shifted to the left by $2^{m-i} d$. The received symbol value $y$ is also folded to the left if it is on the right half of the axis.

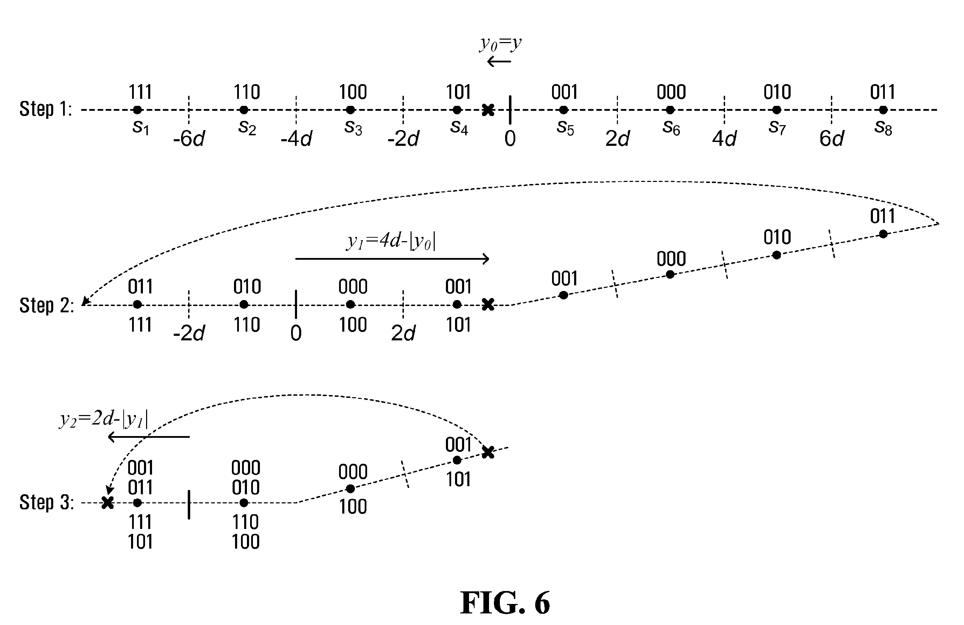

To assist in understanding this, please consider the following simple example in relation to FIG. 6, in which an 8-PAM constellation is used with Gray coding. In this case, $m = 3$ , and so three soft sliced values are derived from the received symbol value $y$ (i.e. $y_0$, $y_1$, and $y_2$, respectively corresponding to the most significant bit, the middle bit, and the least significant bit of the 3 bits transmitted via the transmitted symbol). Assume the received symbol value $y$ has a value between 0 and $- d,$ as shown in the first step of FIG. 6. The first soft sliced value $y_0$ is simply taken as the value *y.* Intuitively, this is because the first soft sliced value corresponds to the most significant bit, and the decision threshold of the most significant bit is the origin. That is, due to the Gray coding, all the most significant bits on the left side of the axis are "1", and all the most significant bits on the right side of the axis are "0", and so the decision as to what most significant bit was sent can be made by the sign of the received value $y$ (i.e., if $y$ is negative then "1" was most likely sent and if $y$ is positive then "0" was most likely sent). The absolute value of $y$ also indicates how likely it is that that particular bit was sent, since the farther the value $y$ is from the origin, the more likely the particular bit was sent. Thus, for the most significant bit, the value of $y$ itself is a good soft-sliced value $y_0$ for the most significant bit.

For the middle bit, the soft sliced value $y_1$ can then be obtained as shown in step 2 of FIG. 6, i.e, by folding the right half of the constellation axis on top of the left half of the constellation axis, and then shifting the origin to the left by $2^{m-i} d = 2^{3-1} d = 4d$. With this fold, and due to the Gray coding, the new origin of the folded axis is now the decision threshold for the middle bit. That is, on the left side of folded axis all the middle bits are "1", and on the right side of the folded axis all the middle bits are "0". Therefore, the received value $y$ on the folded axis is representative of a good soft sliced value $y_1$ for the middle bit. The received value $y$ on the folded axis is $4d - |y_0|$. Thus, the soft-sliced value $y_1$ is $4d - |y_0|$.

For the least significant bit, the soft sliced value $y_2$ can then be obtained as shown in step 3 of FIG. 6, by again folding the right half of the folded constellation axis on top of the left half of the folded constellation axis, and then shifting the origin to the left by $2^{m-i} d = 2^{3-2} d = 2d$. With this additional fold, and due to the Gray coding, the new origin of the double-folded axis is now the decision threshold for the least significant bit. That is, on the left side of the double-folded axis all the least significant bits are "1", and on the right side of the double-folded axis all the least significant bits are "0". Therefore, the received value $y$ on the double-folded axis is representative of a good soft sliced value $y_2$ for the least significant bit. The received value $y$ on the double-folded axis is $2d - |y_1|$. Thus, the soft-sliced value $y_2$ is $2d - |y_1|$.

The example described above with reference to FIG. 6 is just one example using 8-PAM to help explain the intuitive meaning associated with this particular soft-slicing. In general, and as discussed above, assuming a $2^m$-PAM constellation having a distance of $2d$ between adjacent constellation points and Gray coding, then the received value $y$ may be soft-sliced as follows:

$$y_0 = y,$$

$$y_i = 2^{m-i} d - |y_{i-1}|, \, i = 1,...,m-1$$

In the specific example in FIG. 6 (i.e. for the case of $m = 3$), then $y_0 = y$, $y_1 = 4d - |y_0|$, and $y_2 = 2d - |y_1|$.

As mentioned above, the purpose of soft slicing the received value $y$ is to facilitate the computation of reliability values, such as the LLR. Let us assume that the LLR for each of the $m$ bits received via the symbol value $y$ is computed as shown in equation (2):

$$L(b_i) = \frac{\min_{\vec{b}, b_i=1} |y - x_{\vec{b}}|^2 - \min_{\vec{b}, b_i=0} |y - x_{\vec{b}}|^2}{2\sigma^2}, \, i = 0,...,m-1 \quad \text{(equation 2)}.$$

Then, with reference to terms in this equation (which may also be present in other reliability computations), and with reference to the soft slicing discussed herein, the following three observations are made:

**Observation (1):**

$$\min_{\vec{b}, b_i=1} |y - x_{\vec{b}}| = \begin{cases} \min_{\vec{b}, b_i = \hat{b}_i} |y - x_{\vec{b}}|, & \hat{b}_i = 1 \\ \min_{\vec{b}, b_i \neq \hat{b}_i} |y - x_{\vec{b}}|, & \hat{b}_i = 0 \end{cases}.$$

Similarly,

$$\min_{\bar{b}, b_i = 0} \mid y - x_{\bar{b}} \mid = \begin{cases} \min_{\bar{b}, b_i \neq \hat{b}_i} \mid y - x_{\bar{b}} \mid, \hat{b}_i = 1 \\ \min_{\bar{b}, b_i = \hat{b}_i} \mid y - x_{\bar{b}} \mid, \hat{b}_i = 0 \end{cases},$$

where $\hat{b}_i$ is the $i^{th}$ bit of the hard decision $\hat{b}$ corresponding to the received value $y$.

The hard decision $\hat{b}$ corresponding to the received value $y$ is the pattern of bits representing the constellation demapper's decision/guess as to what pattern of bits were most likely sent via the received symbol. Typically, the hard decision is the most likely pattern of $m$ bits transmitted given the received value $y$. In particular, for channel noise modelled as AWGN, the hard decision of the received symbol value $y$ is the bit pattern corresponding to the transmitted symbol $x_{\bar{b}}$ that is closest to the received symbol value $y$ in the constellation. For example, with reference to FIG. 6, in this example, since the received value $y$ is between 0 and $- d$, then the hard decision is "101" (corresponding to $x_{\bar{b}} = s_4 = -d$), since "101" is the bit pattern of the closest symbol.

Observation (1) is a mathematical equivalence that is self-explanatory on its face. That is, if you determine the hard decision bits, then $\min_{\bar{b}, b_i = k} \mid y - x_{\bar{b}} \mid$ will either be equal to $\min_{\bar{b}, b_i = \hat{b}_i} \mid y - x_{\bar{b}} \mid$ (if $\hat{b}_i = k$) or equal to $\min_{\bar{b}, b_i \neq \hat{b}_i} \mid y - x_{\bar{b}} \mid$ (if $\hat{b}_i \neq k$) since $k$ can only be 0 or 1.

Therefore, for example, the terms $\min_{\bar{b}, b_i = 1} \mid y - x_{\bar{b}} \mid^2$ and $\min_{\bar{b}, b_i = 0} \mid y - x_{\bar{b}} \mid^2$ in equation (2) can be computed by computing $\min_{\bar{b}, b_i = \hat{b}_i} \mid y - x_{\bar{b}} \mid$ and $\min_{\bar{b}, b_i \neq \hat{b}_i} \mid y - x_{\bar{b}} \mid$. If $\min_{\bar{b}, b_i = \hat{b}_i} \mid y - x_{\bar{b}} \mid$ and $\min_{\bar{b}, b_i \neq \hat{b}_i} \mid y - x_{\bar{b}} \mid$ are computed, then $\min_{\bar{b}, b_i = 1} \mid y - x_{\bar{b}} \mid^2$ and $\min_{\bar{b}, b_i = 0} \mid y - x_{\bar{b}} \mid^2$ can be computed by computing and squaring each of the values of $\min_{\bar{b}, b_i = \hat{b}_i} \mid y - x_{\bar{b}} \mid$ and $\min_{\bar{b}, b_i \neq \hat{b}_i} \mid y - x_{\bar{b}} \mid$.

A simplification that allows for $\min_{\bar{b}, b_i = \hat{b}_i} \mid y - x_{\bar{b}} \mid$ and $\min_{\bar{b}, b_i \neq \hat{b}_i} \mid y - x_{\bar{b}} \mid$ to be computed more easily is the subject of Observations (2) and (3) respectively.

**Observation (2):** $\min_{\bar{b}, b_i = \hat{b}_i} \mid y - x_{\bar{b}} \mid = \mid y - x_{\hat{b}} \mid$, where $\hat{b}_i$ is the $i^{th}$ bit of the hard decision $\hat{b}$, and $x_{\hat{b}}$ is the transmitted symbol corresponding to the hard decision $\hat{b}$. To help appreciate this observation, please consider the following. As mentioned above, for AWGN, the hard decision corresponding to the received value $y$ is the bit pattern corresponding to the transmitted symbol $x_b$ that is closest to the received symbol value $y$ in the constellation. Therefore, to compute $\min_{\bar{b}, b_i = \hat{b}_i} \mid y - x_{\bar{b}} \mid$, that is, to compute the minimum of the distances between received symbol value $y$ and all the transmitted symbols that have the hard decision bit as the $i^{th}$ bit, all that needs to be done is compute the distance to the hard decision symbol, since it will be closest (and therefore the smallest distance) to the received symbol value *y*. That is, $\min\limits_{\vec{b},b_i=\hat{b}_i} \mid y - x_{\vec{b}} \mid = \mid y - x_{\hat{b}} \mid$.

**Observation (3):** $\min\limits_{\vec{b},b_i\neq\hat{b}_i} \mid y - x_{\vec{b}} \mid = d + \mid y_i \mid$ for each soft sliced value $y_i$. To help intuitively appreciate this observation, consider the soft slicing discussed herein. When the axis is overlapped for computation of the $i^{th}$ soft slice value $y_i$, then the closest symbol to the received value *y* on the overlapped axis that has a bit pattern with an $i^{th}$ bit not equal to the hard decision $i^{th}$ bit is the first symbol on the other side of the decision axis (origin). This is the minimum distance of all of the distances to each of the symbols having a bit pattern with an $i^{th}$ bit not equal to the hard decision $i^{th}$ bit: $\min\limits_{\vec{b},b_i\neq\hat{b}_i} \mid y - x_{\vec{b}} \mid$. The computation of this minimum distance is $|y_i|$ (to get to the origin of the overlapped axis) plus the distance between the origin and the first constellation point on the other side of the overlapped axis (i.e. the distance *d*). Therefore, $\min\limits_{\vec{b},b_i\neq\hat{b}_i} \mid y - x_{\vec{b}} \mid = d + \mid y_i \mid$.

In view of the three observations above, there are provided below some methods for computing the LLR via equation (2).

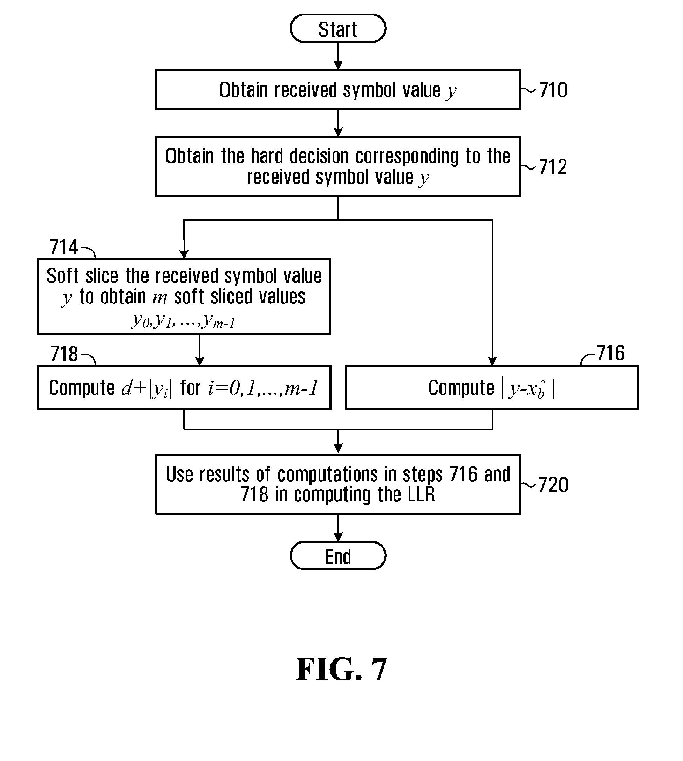

For a $2^m$-PAM constellation having a distance of $2d$ between adjacent constellation points and Gray coding, the following method can be performed in order to compute the LLR of equation (2) for each of the *m* bits corresponding to a received symbol value *y*. This method is described with reference to FIG. 7 and is performed by the constellation demapper 120.

In step 710, the constellation demapper 120 obtains the received symbol value *y*.

Next, in step 712, the constellation demapper 120 obtains the hard decision corresponding to the received value *y*. As mentioned above, and in this embodiment, the hard decision corresponding to the received value *y* is the most likely pattern of *m* bits transmitted given the received value *y*. For channel noise modelled as AWGN, the hard decision of the received symbol value *y* is the bit pattern corresponding to the transmitted symbol that is closest to the received symbol value *y* in the constellation. The hard decision consists of a pattern *of m* bits:

$$b_0 b_1 ... b_{m-1}.$$

Then, in step 714, the constellation demapper 120 soft slices the received symbol value *y* to obtain the *m* soft-sliced values $y_0,..., y_{m-1}$. In this specific embodiment, the soft slicing method described above is used, such that the received value *y* is sliced into *m* soft-sliced values $y_0,..., y_{m-1}$ as follows:

$$y_0 = y,$$

$$y_i = 2^{m-i}d - \mid y_{i-1} \mid, \; i = 1,...,m-1$$

Next, in step 716, the constellation demapper 120 computes $|y - x_{\hat{b}}|$, where $x_{\hat{b}}$ is the transmitted symbol corresponding to the hard decision. Recall, from observation (2) that $\mid y - x_{\hat{b}} \mid = \min\limits_{\vec{b},b_i=\hat{b}_i} \mid y - x_{\vec{b}} \mid$. As

discussed above with reference to observation (2), the computation $|y - x_b|_{\hat{b}}$ is simply the distance to the symbol $x_{\hat{b}}$ in the constellation representing the hard decision. That is, $|y - x_{\hat{b}}|$ is the distance to the symbol in the constellation that is closest to the received value *y*.

One way to compute $|y - x_{\hat{b}}|$ is to compute it directly since the value *y* is known (it is received) and since $x_{\hat{b}}$ can be determined from the hard decision. Specifically, $x_{\hat{b}}$ is the symbol in the constellation that represents the bit pattern corresponding to the hard decision. In this implementation, the hard decision would need to be obtained, if the constellation demapper 120 does not already have it.

Another way to easily compute $\mid y - x_{\hat{b}} \mid$ is to use the sliced values computed in step 714. Specifically, for the specific embodiments described herein, the following mathematical equivalency holds: $| _y - x\hat{b}, |=|| y_{m-1} | -d |$. To help intuitively understand this mathematical equivalency, please consider the following. When determining sliced value $y_{m-1}$ the axis is overlapped such that there are only two constellation points remaining, one on each side of the decision axis (as in step 3 of FIG. 6, for example). Therefore, the closest constellation point on this folded axis is either $d$ or $- d$ (depending on which side of the decision threshold $y_{m-1}$ is on), and therefore the distance between $y_{m-1}$ and its closest constellation point is $| y_{m-1} | -d |$. Thus, it is possible to compute $| _y - x_b^\wedge |$ as $|| y_{m-1} | -d |$.

In step 718, the constellation demapper 120 then computes $d+ | y_i |$ for each soft sliced value $y_i$. Recall, from observation (3), that

$$d+ | y_i |= \min_{\vec{b}, b_i \neq \hat{b}_i} | y - x_{\vec{b}} | .$$

Finally, in step 720, the constellation demapper 120 computes the LLR value:

$$L(b_i) = \frac{\min\limits_{\vec{b}, b_i =1} | y - x_{\vec{b}} |^2 - \min\limits_{\vec{b}, b_i =0} | y - x_{\vec{b}} |^2}{2\sigma^2}, i = 0,...,m - 1 \quad \text{(equation 2),}$$

by simply substituting in the values computed in steps 716 and 718 as per observation (1). In particular:

$$\min_{\vec{b}, b_i =1} | y - x_{\vec{b}} |^2 = \left[ \min_{\vec{b}, b_i =1} | y - x_{\vec{b}} | \right]^2 \quad \text{and}$$

$$\min_{\vec{b}, b_i =0} | y - x_{\vec{b}} |^2 = \left[ \min_{\vec{b}, b_i =0} | y - x_{\vec{b}} | \right]^2, \quad \text{where} \quad \min_{\vec{b}, b_i =1} | y - x_{\vec{b}} | \quad \min_{\vec{b}, b_i =0} | y - x_{\vec{b}} |$$

are obtained via the results of steps 716 and 718.

It will be appreciated that steps 716 and 718 may be computed in any order, or even in parallel (as illustrated). Also, step 716 may be computed in parallel with one or both of steps 714 and 718.

By performing the method of FIG. 7, the computational complexity for computing the LLR may be reduced in comparison to computing equation (2) using a brute force (exhaustive search) approach, particularly when m is large. However, equation (2) is still computed exactly. That is, no approximation has been introduced to reduce complexity, just simplifications using the combination of the observations above.

To help better understand and appreciate the method of FIG. 7, please consider the following simple example. Assume an 8-PAM constellation with Gray coding, as in FIG. 2. Assume also that there is AWGN, that the transmitted set of bits is $b_0 b_1 b_2 = 101$ (corresponding to transmitted symbol $x_b = s_4 = -d$), and that the received symbol value is $y = 0.2d$ . To compute the LLR value of the first bit $b_0$

$$L(b_0) = \frac{\min\limits_{\vec{b}, b_0 =1} | y - x_{\vec{b}} |^2 - \min\limits_{\vec{b}, b_0 =0} | y - x_{\vec{b}} |^2}{2\sigma^2}$$

via the method of FIG. 7, the following is performed. As per step 712, the hard decision corresponding to the received value $y$ is obtained, which in this case is $\hat{b}_0 \hat{b}_1 \hat{b}_2 = 001$, since $y = 0.2d$ is closest to the symbol $x_b^\wedge = s_5 = d$ . Therefore, $\hat{b}_0 = 0$.

As per step 714, the value $y$ is then soft sliced to obtain $y_0 = y$ , $y_1 = 4d-|y_0|$ and $y_2 = 2d-|y_1|$. As per step 716, the distance to the closest to the symbol $x_b^\wedge$ (which corresponds to the hard decision) is computed. As discussed above in relation to step 716, this can be computed by $| y-x_b^\wedge |=|| y_2 | -d |$ As also discussed above in relation to step 716:

$$| y - x_{\hat{b}} |= \min_{\vec{b}, b_0 = \hat{b}_0} | y - x_{\vec{b}} | \; .$$

As per step 718, the value $d+|y_0|$ is also computed. As also discussed above in relation to step 718:

$$d+ | y_0 |= \min_{\vec{b}, b_0 \neq \hat{b}_0} | y - x_{\vec{b}} |$$

Then, as discussed above in relation to observation (1):

$$\min_{\vec{b}, b_0 = 1} | y - x_{\vec{b}} |= \left\{ \begin{array}{l} \min_{\vec{b}, b_0 = \hat{b}_0} | y - x_{\vec{b}} |, \hat{b}_0 = 1 \\ \min_{\vec{b}, b_0 \neq \hat{b}_0} | y - x_{\vec{b}} |, \hat{b}_0 = 0 \end{array} \right\} = \min_{\vec{b}, b_0 \neq \hat{b}_0} | y - x_{\vec{b}} |= d+ | y_0 |$$

since $\hat{b}_0 = 0$. This computation reduces to that already computed in step 718. Also

$$\min_{\vec{b}, b_0 = 0} | y - x_{\vec{b}} |= \left\{ \begin{array}{l} \min_{\vec{b}, b_0 \neq \hat{b}_0} | y - x_{\vec{b}} |, \hat{b}_0 = 1 \\ \min_{\vec{b}, b_0 = \hat{b}_0} | y - x_{\vec{b}} |, \hat{b}_0 = 0 \end{array} \right\} = \min_{\vec{b}, b_0 = \hat{b}_0} | y - x_{\vec{b}} |= | y - x_{\hat{b}} |$$

since $\hat{b}_0 = 0$. This computation reduces to that already computed in step 716. Thus, the LLR value

$$L(b_0) = \frac{\min_{\vec{b}, b_0 = 1} | y - x_{\vec{b}} |^2 - \min_{\vec{b}, b_0 = 0} | y - x_{\vec{b}} |^2}{2\sigma^2}$$

can be computed using the computations in steps 714 to 718. If desired, the other LLR values $L(b_1)$ and $L(b_2)$ may also be computed using the method above.

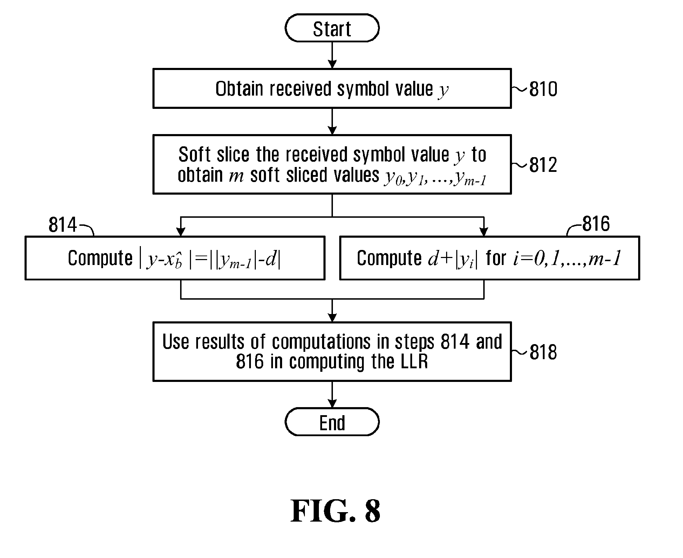

The method of FIG. 7 requires the hard decision $b_0 b_1 ... b_{m-1}$. Another embodiment is described with reference to FIG. 8 in which it is not necessary to explicitly compute the hard decision. This may save additional computations.

In step 810, the constellation demapper 120 obtains the received symbol value $y$.

Next, in step 812, the constellation demapper 120 soft slices the received symbol value $y$ to obtain *the m* soft-sliced values $y_0,..., y_{m-1}$. In this specific embodiment, the soft slicing method described above is used, such that the received value $y$ is sliced into m soft-sliced values $y_0,...,y_{m-1}$ as follows:

$$y_0 = y,$$

$$y_i = 2^{m-i} d- | y_{i-1} |, i = 1,...,m-1$$

Next , in step 814, the constellation demapper 120 computes $|\,y-x_{\hat{b}}\,|$, where $x_{\hat{b}}$ is the transmitted symbol corresponding to the hard decision. However, the hard decision has not been obtained, and therefore $x_{\hat{b}}$ has not been obtained. This is not a problem since, as discussed above with reference to 716, $|y - x_{\hat{b}}|=||\,y_{m\text{-}1}\,|\,\text{-}d\,|$ Therefore, in step 814, the constellation demapper 120 computes $||\,y_{m\text{-}1}\,|\,\text{-}d\,|$. Recall, from observation (2) that

$$|\,y - x_{\hat{b}}\,| = \min_{\bar{b},b_i=\hat{b}_i} |\,y - x_{\bar{b}}\,| \, . \qquad \text{Therefore,}$$

$$||\,y_{m-1}\,| - d\,| = |\,y - x_{\hat{b}}\,| = \min_{\bar{b},b_i=\hat{b}_i} |\,y - x_{\bar{b}}\,| \, .$$

In step 816, the constellation demapper 120 then computes $d+|\,y_i\,|$ for each soft sliced value $y_i$. Recall, from observation (3), that

$$d + |\,y_i\,| = \min_{\bar{b},b_i \neq \hat{b}_i} |\,y - x_{\bar{b}}\,| \, .$$

Finally, in step 818, the constellation demapper 120 computes the LLR value:

$$L(b_i) = \frac{\min\limits_{\bar{b},b_i=1} |\,y - x_{\bar{b}}\,|^2 - \min\limits_{\bar{b},b_i=0} |\,y - x_{\bar{b}}\,|^2}{2\sigma^2} , \, i = 0,...,m-1 \qquad \text{(equation 2),}$$

by simply substituting in the values computed in steps 814 and 816 as per observation (1). Note that when substituting the values in equation (2) as per observation (1), whenever the hard decision bit $\hat{b}_i$ is required, the sign of the corresponding soft slice value $y_i$ can be used. Specifically, if $y_t \geq 0$, then $\hat{b}_i = 0$, and if $y_i < 0$ , then $\hat{b}_i =1$. Therefore:

$$L(b_i) = \frac{\min\limits_{\bar{b},b_i=1} |\,y - x_{\bar{b}}\,|^2 - \min\limits_{\bar{b},b_i=0} |\,y - x_{\bar{b}}\,|^2}{2\sigma^2}$$

$$= \begin{cases} \dfrac{\min\limits_{\bar{b},b_i \neq \hat{b}_i} |\,y - x_{\bar{b}}\,|^2 - \min\limits_{\bar{b},b_i=\hat{b}_i} |\,y - x_{\bar{b}}\,|^2}{2\sigma^2} , & y_i \geq 0 \\[4ex] \dfrac{\min\limits_{\bar{b},b_i=\hat{b}_i} |\,y - x_{\bar{b}}\,|^2 - \min\limits_{\bar{b},b_i \neq \hat{b}_i} |\,y - x_{\bar{b}}\,|^2}{2\sigma^2} , & y_i < 0 \end{cases} , \, i = 0,...,m-1 \, .$$

In this way, by performing the method of FIG. 8, it is not necessary to explicitly compute the hard decision of the received symbol, like is done in step 712 of the method of FIG. 7. This may save some computations and even further reduce the complexity of the LLR calculation.

It will be appreciated that steps 814 and 816 may be computed in any order, or even in parallel (as illustrated).

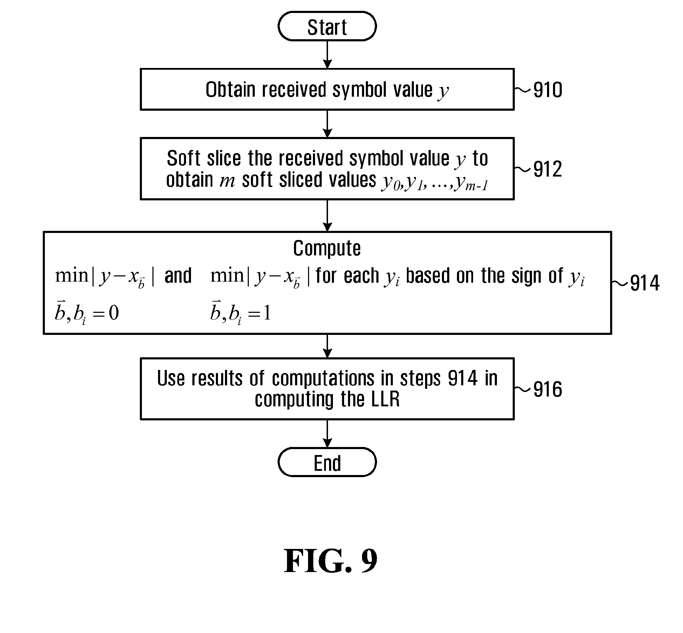

A variation of the method of FIG. 8 is shown with reference to FIG. 9. In the method of FIG. 9, the sign of each soft sliced value $y_i$ is explicitly used to determine which computation to perform in the steps corresponding to steps 814 and 816 of the method of FIG. 8.

In step 910, the constellation demapper 120 obtains the received symbol value $y$.

Next, in step 912, the constellation demapper 120 soft slices the received symbol value $y$ to obtain the m soft-sliced values $y_0,..., y_{m\text{-}1}$. In this specific embodiment, the soft slicing method described above is used, such that the received value *y* is sliced into *m* soft-sliced values $y_0, ..., y_{m-1}$ as follows:

$$y_0 = y,$$

$$y_i = 2^{m-i} d - |y_{i-1}|, i = 1, ..., m-1$$

Next, in step 914, the constellation demapper 120 computes $\min_{\vec{b}, b_i = 0} |y - x_{\vec{b}}|$ and $\min_{\vec{b}, b_i = 1} |y - x_{\vec{b}}|$ as follows:

$$\min_{\vec{b}, b_i = 0} |y - x_{\vec{b}}| = \begin{cases} ||y_{m-1}| - d|, & y_i \geq 0 \\ |y_i| + d, & y_i < 0 \end{cases}, i = 0, ..., m-1$$

$$\min_{\vec{b}, b_i = 1} |y - x_{\vec{b}}| = \begin{cases} |y_i| + d, & y_i \geq 0 \\ ||y_{m-1}| - d|, & y_i < 0 \end{cases}, i = 0, ..., m-1$$

That is, if $y_i \geq 0$, then this indicates that the $i^{th}$ hard decision bit $b_i$ is zero, and so

$$\min_{\vec{b}, b_i = 0} |y - x_{\vec{b}}| = \min_{\vec{b}, b_i = \hat{b}_i} |y - x_{\vec{b}}| = ||y_{m-1}| - d|$$ and

$$\min_{\vec{b}, b_i = 1} |y - x_{\vec{b}}| = \min_{\vec{b}, b_i \neq \hat{b}_i} |y - x_{\vec{b}}| = |y_i| + d$$. On the other hand, if $y_i < 0$, then this indicates that the $i^{th}$ hard decision bit $b_i$ is one, and so $\min_{\vec{b}, b_i = 0} |y - x_{\vec{b}}| = \min_{\vec{b}, b_i \neq \hat{b}_i} |y - x_{\vec{b}}| = |y_i| + d$ and

$$\min_{\vec{b}, b_i = 1} |y - x_{\vec{b}}| = \min_{\vec{b}, b_i = \hat{b}_i} |y - x_{\vec{b}}| = ||y_{m-1}| - d|$$.

Finally, in step 916, the constellation demapper 120 computes the LLR value:

$$L(b_i) = \frac{\min_{\vec{b}, b_i = 1} |y - x_{\vec{b}}|^2 - \min_{\vec{b}, b_i = 0} |y - x_{\vec{b}}|^2}{2\sigma^2}, i = 0, ..., m-1$$ (equation 2),

by simply substituting in the values computed in step 914: $\min_{\vec{b}, b_i = 1} |y - x_{\vec{b}}|^2 = \left[ \min_{\vec{b}, b_i = 1} |y - x_{\vec{b}}| \right]^2$,

where $\displaystyle\min_{\bar{b},b_i=1}|y-x_{\bar{b}}|$ is that computed in step 914, and

$$\min_{\bar{b},b_i=0}|y-x_{\bar{b}}|^2=\left[\min_{\bar{b},b_i=0}|y-x_{\bar{b}}|\right]^2, \text{ where } \min_{\bar{b},b_i=0}|y-x_{\bar{b}}| \text{ is that computed in step}$$

914.

The methods of FIGs. 7 to 9 assume Gray coding. However, the methods described herein need not be limited to Gray coding. Instead, the methods described herein can be adapted for other modulation schemes and/or other bit-to-symbol mappings. However, the exact way in which the received value $y$ is soft sliced will typically need to be modified to complement the bit-to-symbol mapping of the constellation.

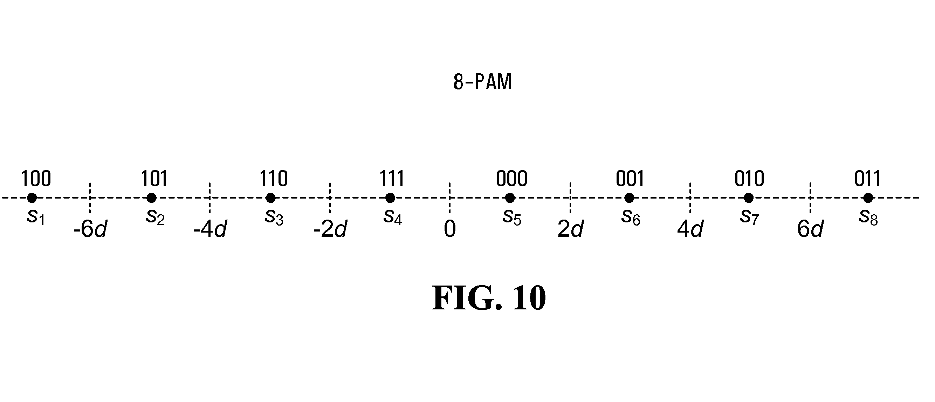

Consider, for example, the 8-PAM constellation shown in FIG. 10. This constellation has a different bit-to-symbol mapping based on natural coding (not Gray coding). Observations (1) to (3) discussed above still apply, as long as the soft slicing is modified as appropriate to complement the bit-to-symbol mapping. Specifically, for the particular constellation and bit-to-symbol mapping in FIG. 10, the received value $y$ can be soft sliced as follows:

$$y_0 = y,$$

$$y_i = \begin{cases} y_{i-1} - 2^{m-i}d, & y_{i-1} \ge 0 \\ y_{i-1} + 2^{m-i}d, & y_{i-1} < 0 \end{cases}, i = 1,...,m-1$$

This soft slicing technique is also intuitively meaningful as follows. To obtain each soft sliced value $y_i$, the PAM constellation can be shifted and overlapped. This is referred to as a "shift-and-overlap" approach. Specifically, in order to obtain the $i^{th}$ coordinate axis for slicing the soft value $y_i$, the left half of the $(i\text{-}1)^{th}$ coordinate axis is shifted to the right by $2^{m-i}d$, and the right half of the $(i\text{ - }1)^{th}$ coordinate axis is shifted to the left by $2^{m-i}d$. The right and left halves of the $(i\text{ -}1)^{th}$ coordinate axes therefore overlap. The received value $y$ is also shifted by the same amount as the side of the axis it is on. The origin, i.e. the decision boundary, is not moved. The new value of $y$ indicates the next soft sliced value.

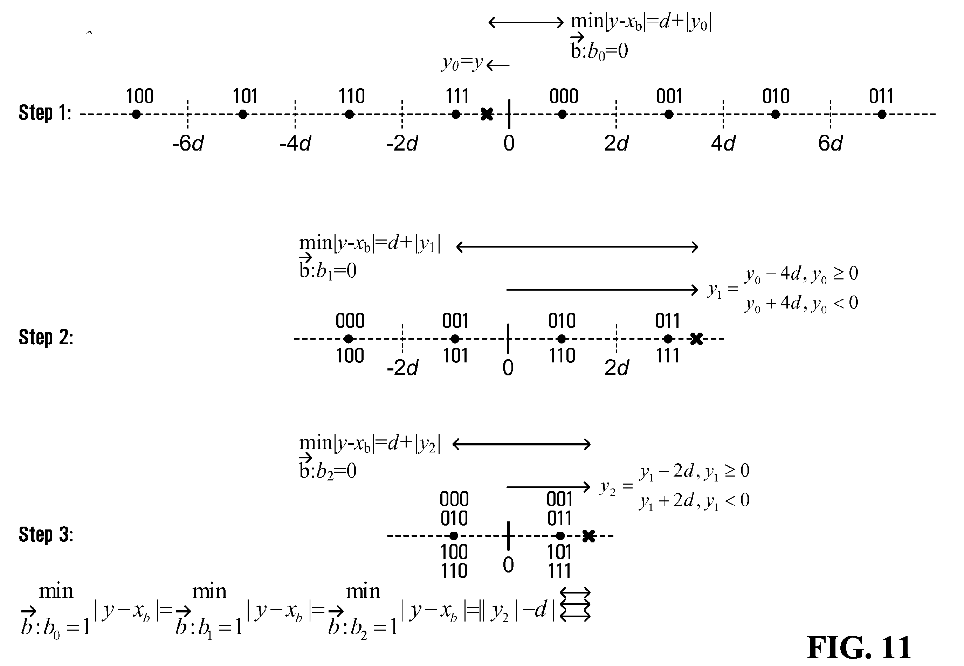

To assist in understanding this, please consider the following simple example in relation to FIG. 11. In this case, $m = 3$, and so three soft sliced values are derived from the received symbol value $y$ (i.e. $y_0$, $y_1$, and $y_2$, respectively corresponding to the most significant bit, the middle bit, and the least significant bit of the 3 bits transmitted via the transmitted symbol). Assume the received symbol value $y$ has a value between 0 and $-d$, as shown in the first step of FIG. 11. The first soft sliced value $y_0$ is simply taken as the value $y$. Intuitively, this is because the first soft sliced value corresponds to the most significant bit, and the decision threshold of the most significant bit in this constellation is the origin. That is, all the most significant bits on the left side of the axis are "1", and all the most significant bits on the right side of the axis are "0", and so the decision as to what most significant bit was sent can be made by the sign of the received value $y$ (i.e., if $y$ is negative than "1" was most likely sent and if $y$ is positive than "0" was most likely sent). The absolute value of $y$ also indicates how likely it is that that particular bit was sent, since the farther the value $y$ is from the origin, the more likely the particular bit was sent. Thus, for the most significant bit, the value of $y$ itself is a good soft-sliced value $y_0$ for the most significant bit.

For the middle bit, the soft sliced value $y_1$ can then be obtained as shown in step 2 of FIG. 11, i.e, by shifting the left half of the coordinate axis to the right by $2^{m-i}d = 2^{3-1}d = 4d$, and the right half of the coordinate axis to the left by $2^{m-i}d = 2^{3-1}d = 4d$. The received symbol is also shifted by the same amount as the side of the axis it is on. The origin, i.e, the decision boundary, remains the same. With this shift, the origin of the overlapped axis is now the decision threshold for the middle bit. That is, on the left side of overlap axis all the middle bits are "0", and on the right side of the overlapped axis all the middle bits are "1 ". Therefore, the received symbol on the overlapped axis is representative of a good soft sliced value $y_1$ for the middle bit. The position of the received symbol on the overlapped axis will depend on whether it was on the right side of the original axis (i.e. $y_0 \ge 0$) or whether it was on the left side of the original axis (i.e. $y_0 < 0$). If it were on the right side of the original axis (i.e. $y_0 \ge 0$), then the position of the received symbol on the overlapped axis would be $y_0$ -4d. However, in this example the received symbol is on the left side of the original axis (i.e. $y_0 < 0$), and therefore its position on the overlapped axis is $y_0$ + 4d. Thus, the soft-sliced value $y_1$ is $y_0$ + 4d.

For the least significant bit, the soft sliced value $y_2$ can then be obtained as shown in step 3 of FIG. 11, by again shifting the left half of the overlapped coordinate axis to the right by $2^{m-i} d = 2^{3-2} d = 2d$, and the right half of the coordinate axis to the left by $2^{m-i} d = 2^{3-2} d = 2d$. The received symbol is again shifted by the same amount as the side of the axis it is on. The origin, i.e, the decision boundary, remains the same. With this shift, the origin of the double overlapped axis is now the decision threshold for the least significant bit. That is, on the left side of double overlapped axis all the least significant bits are "0", and on the right side of the overlapped axis all the least significant bits are "1 ". Therefore, the received symbol on the double overlapped axis is representative of a good soft sliced value $y_2$ for the least significant bit. The position of the received symbol on the double overlapped axis will depend on whether it was on the right side of the single overlapped axis (i.e. $y_1 \geq 0$) or whether it was on the left side of the single overlapped axis (i.e. $y_1 < 0$). In this example, it is on the right side of the single overlapped axis (i.e. $y_1 \geq 0$), and therefore its position on the double overlapped axis is $y_1 - 2d$.

The example described above with reference to FIG. 11 is just one example using 8-PAM to help explain the intuitive meaning associated with this particular soft-slicing. In general, assuming a $2^m$-PAM constellation having a distance of $2d$ between adjacent constellation points and a bit to symbol mapping scheme having a natural coded pattern along the lines of that shown in FIG. 10, then the received value $y$ may be soft-sliced as follows:

$$y_0 = y,$$

$$y_i = \begin{cases} y_{i-1} - 2^{m-i} d, & y_{i-1} \geq 0 \\ y_{i-1} + 2^{m-i} d, & y_{i-1} < 0 \end{cases}, i = 1,...,m-1$$

In the specific example in FIG. 11 (i.e. for the case of $m = 3$), then $y_0 = y$,

$$y_1 = \begin{cases} y_0 - 4d, & y_0 \geq 0 \\ y_0 + 4d, & y_0 < 0 \end{cases}, \text{ and } y_2 = \begin{cases} y_1 - 2d, & y_1 \geq 0 \\ y_1 + 2d, & y_1 < 0 \end{cases}.$$

For a constellation with a bit-to-symbol mapping having a natural coded pattern along the lines of that shown in FIG. 10, the observations (1) to (3) discussed above still hold with the soft slicing discussed above. Therefore, the method of FIGs. 7 to 9 can be performed, except with the different soft slicing discussed above. That is, the method of any one of FIGs. 7 to 9 still apply, except that the soft slicing in each of steps 714, 812, and 912 is replaced with the following soft slicing:

$$y_0 = y,$$

$$y_i = \begin{cases} y_{i-1} - 2^{m-i} d, & y_{i-1} \geq 0 \\ y_{i-1} + 2^{m-i} d, & y_{i-1} < 0 \end{cases}, i = 1,...,m-1$$

The other steps of the methods of FIGS. 7 to 9 remain unchanged.

As can be appreciated, for other bit to symbol mappings, the methods above can still be applied, but using a soft slicing technique that complements the specific bit to symbol mapping of the constellation. Two different bit to symbol mappings and associated soft slicing methods are discussed above by way of example only. Others are possible.

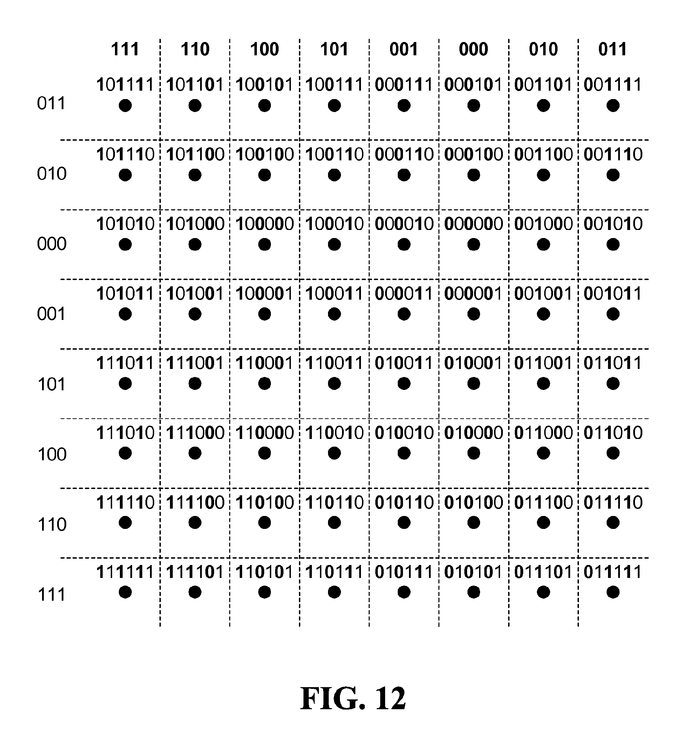

The example methods described above are specific to computing a reliability value in a $2^m$-PAM constellation. That is, it is assumed that the modulation scheme is PAM. However, the methods described herein also apply to computing reliability values for QAM schemes. In particular, a square or a rectangular QAM can typically be decomposed into two independent PAM signals, i.e., in-phase and quadraphase signals. In such QAM schemes, a group of consecutive bits at the input of the constellation mapper can be separated into two sub-groups, in the in-phase bits and the quadraphase bits. Both sub-groups are mapped to a PAM signal, and then the two PAM signals are combined to form a square or rectangular QAM signal. For example, FIG. 12 shows a Gray coded 64-QAM signal that can be decomposed into two independent Gray coded 8-PAM signals. In this case each group of six consecutive bits is separated alternatively into two sub-groups, the in-phase bits (illustrated on the top of the figure and bolded), and the quadraphase bits (illustrated on the left of the figure). Both sub-groups are mapped to a Gray coded 8-PAM signal, and then the two signals are combined to form a Gray coded 64-QAM signal. As can be seen from FIG. 12, the in-phase and quadraphase bits are interleaved.

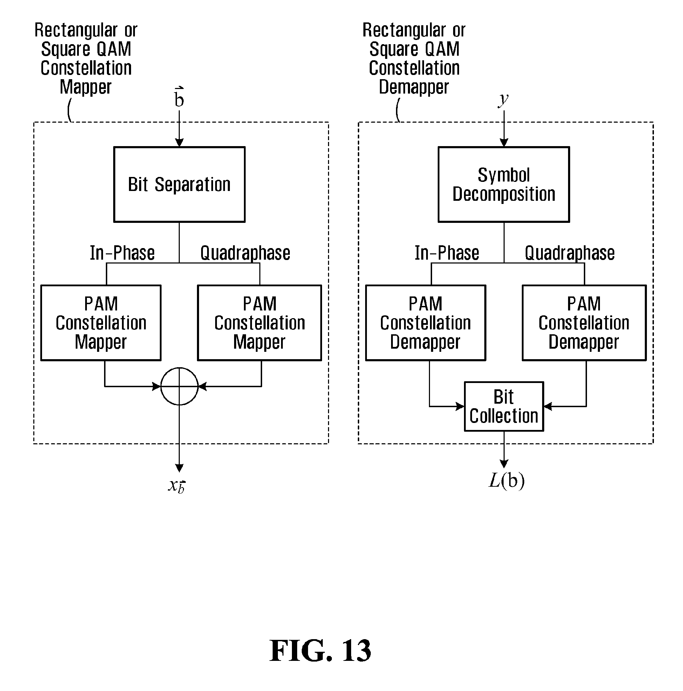

Hence, the rectangular or square mapper/demapper can be implemented by two independent PAM constellation mappers/demappers, as shown in FIG. 13, and when performing the demapping, the PAM demapping methods described herein may be used.

It will be appreciated that the bit separation and collection in FIG. 12 is not limited to the particular QAM constellation illustrated, which is Gray coded and in which the in-phase and quadraphase bits are interleaved. Other coding and bit separation schemes are also possible, such as Gray coded QAM in which the in-phase and quadraphase bits are concatenated, or natural coded QAM where the in-phase and quadraphase bites are interleaved. For example, the QAM constellations in references [1] to [4] can be implemented by two independent PAM constellation mappers/demappers. The bibliographic information for references [1] to [4] is at the end of this description.

Therefore, the methods described herein in relation to PAM constellations can also be applied to QAM constellations by implementing two independent PAM constellation mappers/demappers in the manner described above. Thus, embodiments of the invention apply to both PAM constellations and QAM constellations.

Using the methods described above, the complexity for computing the LLR of equation (2) may be reduced without sacrificing the accuracy of the LLR computation. That is, equation (2) is still computed exactly. The table below shows an example of the complexity reduction achieved in certain applications in comparison to computing the LLR in equation (2) using an exhaustive search. The method using an exhaustive search is assumed to calculate the distances between the received symbol and PAM constellation points on the fly. Hence it results in $m\left(2^{\frac{m}{2}+1} - 1\right)$ additions/subtractions/comparisons. Other exhaustive search implementations are possible, e.g. calculating and saving the distances between the received symbol and the PAM constellation points for calculating the minimum distances, which reduces the number of additions/subtractions/comparisons, but does not change the order $O\left(m2^{\frac{m}{2}}\right)$ and incurs an additional $O\left(2^{\frac{m}{2}}\right)$ memory cost. The method captured in the table below is assumed to be a FIG. 8 implementation, which results in 3$m$ additions/subtractions/comparisons.

| Application | Bits per Symbol | Computation of LLR of Equation (2) | Number of Additions/Subtractions/Comparisons | Complexity Reduction |
|---|---|---|---|---|
| UMTS 64-QAM [1], [2] | 6 | Exhaustive Search | 90 | 80.0% |
| | | Method described herein | 18 | |
| HomeGrid 4096-QAM [3] | 12 | Exhaustive Search | 1524 | 97.6% |
| | | Method described herein | 36 | |
| VDSL2 16348-QAM [4] | 14 | Exhaustive Search | 3570 | 98.8% |
| | | Method described herein | 42 | |

The bibliographic information for references [1] to [4] mentioned in the table above is at the end of this description.

Specific examples are described above. More general embodiments will now be described below.

In the examples above, it is assumed that Log Likelihood Ratio (LLR) values are being computed. More generally, one or more reliability values may be computed during demapping. Also, the specific constellations, soft slicing methods, and reliability value computations are just examples.

With this in mind, and more generally, there is provided a method for computing at least one reliability value from a received symbol value *y* associated with a constellation. The constellation comprises a set of constellation points having a minimum distance of 2*d* between a pair of the constellation points. Examples of such constellations are shown in FIGs. 2 to 4, 10, and 12, although these are only specific examples. The received symbol value *y* represents m bits that were transmitted using a modulation scheme of the constellation. The value m can be any whole number that is greater than or equal to one (for *m* = 1 only one bit is transmitted per symbol and only one reliability value is computed).

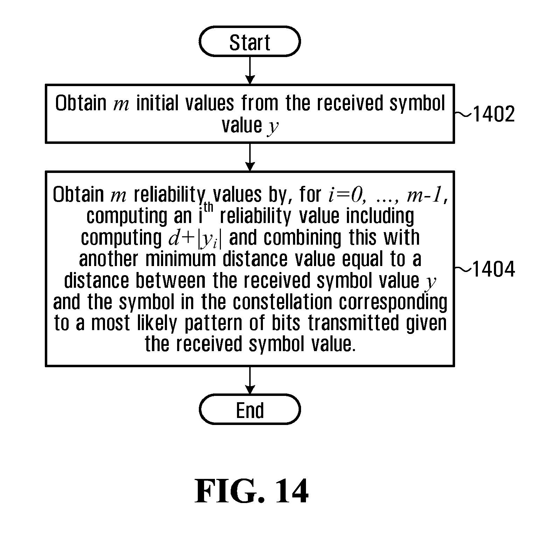

With reference to FIG. 14, the following method is performed in some embodiments to demap the received symbol value *y*. In step 1402, *m* initial values $y_0, y_1, ..., y_{m-1}$ are obtained from the received symbol value *y*, one for each of the m bits. These initial values may be soft sliced values and/or may be obtained by soft slicing the received symbol value *y*. As mentioned earlier, soft slicing is a method of deriving m values from the received value *y* in a way that facilitates computation of a reliability value for each of the m bits using the soft sliced values. Typically, the soft slicing is also performed in a way that is intuitively meaningful, but this need not be the case. Two specific soft-slicing techniques are discussed above. The specific soft slicing method used is implementation specific and depends upon the bit-to-symbol mapping of the constellation.

Next, in step 1404, *m* reliability values are computed by, for *i* = 0,..., *m*-1, computing an i$^{th}$ reliability value including computing $d + |y_i|$ to obtain an i$^{th}$ minimum distance value, where $|y_i|$ is an absolute magnitude of the initial value associated with an i$^{th}$ bit of the m bits, and combining the i$^{th}$ minimum distance value with another minimum distance value equal to a distance between the received symbol value *y* and a symbol $x_{\hat{b}}$ in the constellation corresponding to a most likely pattern of bits transmitted given the received symbol value *y*.

By "combining" the i$^{th}$ minimum distance value with the other minimum distance value, it is meant that these two values are incorporated into a single value or used to compute a single value. For example, the i$^{th}$ minimum distance value and the other minimum distance value may be combined by subtracting one from the other, by adding the two together, by multiplying or dividing the two, or by incorporating the two values into any computation that results in a single value.

By performing the method of FIG. 14, computations may be reduced (e.g. by only computing $d + |y_i|$ and combining it with the other minimum distance value in the reliability computation).

In the method of FIG. 14, *m* reliability values are computed. In other embodiments, fewer than *m* reliability values may be computed (e.g. only one reliability value may be computed for one of the bits). In this case, the method of FIG. 14 would be modified to only compute a subset of reliability values. The other bits (for which reliability values were not computed) may, for example, be represented by their hard decision.

Unlike some of the embodiments described earlier, the method of FIG. 14 is generalized. For example, a method for computing initial values is not specified. The initial values do not even have to be computed by soft slicing. Also, a specific constellation is not specified, and a specific reliability computation is not specified. FIG. 14 demonstrates that the methods described herein can be generalized to constellations, reliability value computations, methods for obtaining initial values, and other demapping scenarios. Step 1404 uses results discussed in both observations (2) and (3) to compute the reliability values.

Optionally, in some embodiments, the other minimum distance value may be computed in the method of FIG. 14 by obtaining the hard decision, and then directly computing the distance between the received symbol value *y* and the symbol $x_{\hat{b}}$ in the constellation corresponding to the hard decision (i.e. by computing $|y - x_{\hat{b}}|$). In such embodiments, the hard decision is the most likely pattern of bits transmitted given the received symbol value *y*.

Alternatively, in some embodiments, the other minimum distance value may instead be computed in the method of FIG. 14 by computing $||y_{m-1}| - d|$. In such embodiments, this value is also equal to the distance between the received symbol value *y* and the symbol $x_{\hat{b}}$ in the constellation.

Optionally, in some embodiments described in relation to FIG. 14, the other minimum distance value may represent a minimum of a set comprising the distances between the received symbol value *y* and all points in the constellation having an associated bit pattern in which a given bit equals the corresponding bit in a hard decision associated with the received symbol value *y*.

Optionally, in some embodiments described in relation to FIG. 14, the minimum distance value $d + |y_i|$ may represent a minimum of a set comprising the distances between the received symbol value *y* and all points in the constellation having an associated bit pattern in which the i$^{th}$ bit does not equal the i$^{th}$ bit of the hard decision.

Optionally, in some embodiments described in relation to FIG. 14, each one of the *m* reliability values may be a Log Likelihood Ratio (LLR) computed as:

$$L(b_i) = \frac{\min_{\bar{b}, b_i = 1} |y - x_{\bar{b}}|^2 - \min_{\bar{b}, b_i = 0} |y - x_{\bar{b}}|^2}{k}$$

where *k* is a scaling value. For example, k may equal one or another real number (e.g. *k* may equal 2σ$^2$).

Optionally, in some such embodiments, when $y_i \geq 0$, then $\min\limits_{\vec{b}, b_i = 0} \left| y - x_{\vec{b}} \right|$ may be computed as the other mimimum distance value (e.g. $\|\, y_{m-1}\,| - d\,|$), and $\min\limits_{\vec{b}, b_i = 1} \left| y - x_{\vec{b}} \right|$ may computed as the $i^{th}$ mimimum distance value $d + | y_i |$. Otherwise, when $y_i < 0$, then $\min\limits_{\vec{b}, b_i = 0} \left| y - x_{\vec{b}} \right|$ may be computed as the $i^{th}$ mimimum distance value $d + | y_i |$ and $\min\limits_{\vec{b}, b_i = 1} \left| y - x_{\vec{b}} \right|$ may be computed as the other mimimum distance value. In such embodiments, the $i^{th}$ minimum distance value and the other minimum distance value are combined by subtracting one from the other.

Optionally, in some embodiments, the constellation may use Gray coding, natural coding, or another type of coding.

Optionally, in some embodiments, the constellation may be square QAM or rectangular QAM, and the demapping may be performed by decomposing the QAM constellation into two independent PAM constellations representing an in-phase and a quadrature-phase signal respectively, and independently demapping each of the two independent PAM constellations.

Optionally, in some embodiments disclosed herein, the value $d$ may be a function of the received energy per bit, or vice versa. For example, in some embodiments, the received energy per bit is $E_b = \dfrac{2^{2m} - 1}{3m} d^2$ for both PAM and square QAM.

In some embodiments, the methods described herein may further comprise performing the demapping for a plurality of received symbols, and decoding the plurality of received symbols using the reliability values as inputs to a soft-input decoder.

In some embodiments disclosed herein, the demapping is performed at the receiving end of a device (e.g. a mobile device). For example, the demapping may be performed at a receiver or in a processing unit connected to or part of the receiver.

In some embodiments, the demapping is performed by a constellation demapper. The constellation demapper may be implemented in a receiver in a communication system, or in a processing unit or a digital processing module connected to or part of the receiver (or receiving end). In some embodiments, the computational steps disclosed herein may be implemented in (and therefore performed by) a digital signal processor or a field programmable gate array (FPGA) or an integrated circuit.

In some embodiments disclosed herein, the one or more reliability values may be forwarded to a soft-input decoder. However, it is not necessary that the reliability values be forwarded to a decoder, depending on the implementation and envisioned use of the reliability values.

In some embodiments, any or all of the methods described herein may be implemented in a mobile device or any other device that communicates over a wireless channel. Optionally, in such embodiments, the method may further comprise receiving a wireless signal from a wireless channel, obtaining the received symbol value $y$ from the wireless signal, and performing decoding using some or all reliability values.

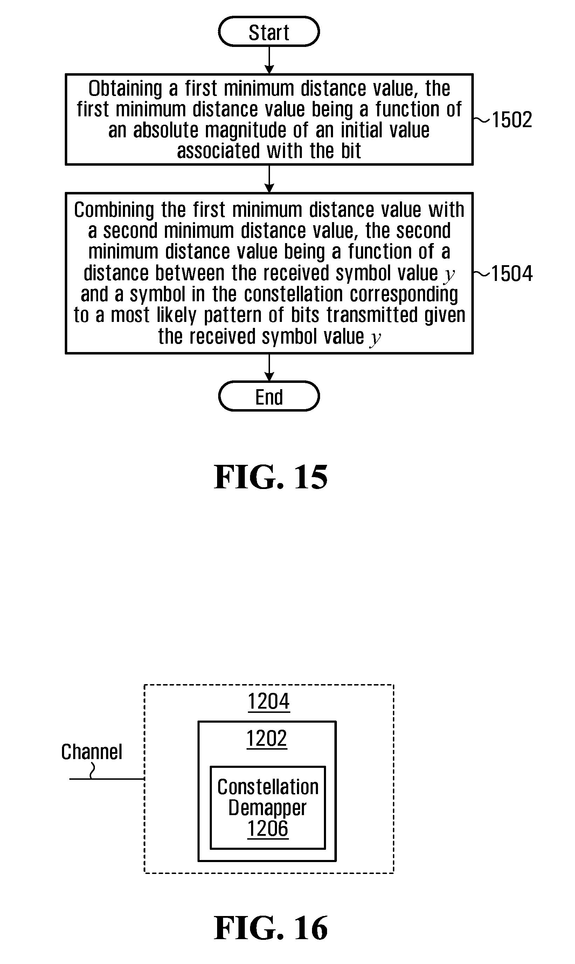

It will be appreciated that more generally there is provided a method for computing a reliability value for a bit of a received symbol value $y$ associated with a constellation. An embodiment of one such method is shown in FIG. 15. With reference to FIG. 15, the reliability value is computed as follows. In step 1502, a first minimum distance value is obtained, the first minimum distance value being a function of an absolute magnitude of an initial value associated with the bit. In step 1504, the first minimum distance value is combined with a second minimum distance value, the second minimum distance value being a function of a distance between the received symbol value $y$ and a symbol $x_{\hat{b}}$ in the constellation corresponding to a most likely pattern of bits transmitted given the received symbol value $y$.

By "combining" the first minimum distance value with the second minimum distance value, it is meant that these two values are incorporated into a single value or used to compute a single value. For example, the first minimum distance value and the second minimum distance value may be combined by subtracting one from the other, by adding the two together, by multiplying or dividing the two, or by incorporating the two values into any computation that results in a single value.

By performing the method of FIG. 15, computations may be reduced

All of the optional additional features described in relation to FIG. 14 may be included in embodiments described in relation to FIG. 15.

FIG. 16 illustrates an embodiment of an apparatus 1202 in a receiving side 1204 of a digital communications system. The apparatus includes a constellation demapper 1206 for performing the demapping (and hence reliability value computation(s)) in accordance with any of the embodiments described above. For example, the demapper 1206 may implement the method of FIG. 14 or FIG. 15.

Although not illustrated, the apparatus 1202 may further include a decoder (such as a soft input decoder) for decoding using the reliability values computed by the demapper 1206.

Although not illustrated, the apparatus 1202 may further include a receiver for receiving a signal from a channel (such as a wireless signal from a wireless channel), and processing circuitry for obtaining the received symbol value from the received signal.

In some embodiments, the apparatus 1202 is part of a mobile device, although this need not be the case (the methods described herein are also applicable to wireline communications systems).

Finally, in some embodiments, there is provided a computer readable medium having stored thereon computer executable instructions that, when executed, cause an apparatus (such as a computing device, a mobile device, etc.) to perform any of the methods described herein.

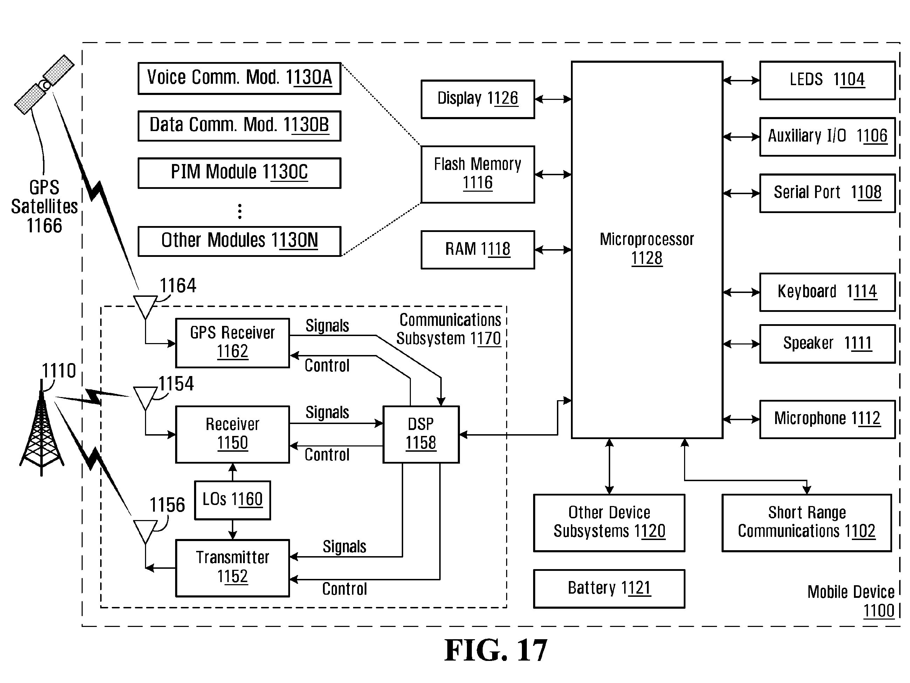

As mentioned above, some of the methods described herein may be implemented on a mobile device. Referring now to FIG. 17, a block diagram is shown of a specific example of a mobile device 1100 that may implement any of the methods described herein. The mobile device 1100 is shown with specific components for implementing different features including (for example), the methods described herein. It is to be understood that the mobile device 1100 is shown with very specific details for exemplary purposes only.

The mobile device 1100 has a housing that may be elongated vertically, or may take on other sizes and shapes (including clamshell housing structures). The keyboard 1114 may include a mode selection key, or other hardware or software for switching between text entry and telephony entry. Alternatively, the mobile device 1100 may have a housing that does not take on other sizes and shapes.

A microprocessor 1128 is shown schematically as coupled between a keyboard 1114 and a display 1126. The microprocessor 1128 controls operation of the display 1126, as well as overall operation of the mobile device 1100, in response to actuation of keys on the keyboard 1114 by a user.

In addition to the microprocessor 1128, other parts of the mobile device 1100 are shown schematically. These include: a communications subsystem 1170; a short-range communications subsystem 1102; the keyboard 1114 and the display 1126, along with other input/output devices including a set of LEDs 1104, a set of auxiliary I/O devices 1106, a serial port 1108, a speaker 1111 and a microphone 1112; as well as memory devices including a flash memory 1116 and a Random Access Memory (RAM) 1118; and various other device subsystems 1120. The keyboard 1114, speaker 111, microphone 1112, display 1126, and LEDs 1104 are part of the user-interface.

The mobile device 1100 may have a battery 1121 to power the active elements of the mobile device 1100.

The mobile device 1100 is in some embodiments a two-way radio frequency (RF) communication device having voice and data communication capabilities. In addition, the mobile device 1100 in some embodiments has the capability to communicate with other computer systems via the Internet. The two-way RF communication is for communicating with a network.

Operating system software executed by the microprocessor 1128 is in some embodiments stored in a persistent store, such as the flash memory 1116, but may be stored in other types of memory devices, such as a read only memory (ROM) or similar storage element. In addition, system software, specific device applications, or parts thereof, may be temporarily loaded into a volatile store, such as the RAM 1118. Communication signals received by the mobile device 1100 may also be stored to the RAM 1118.

The microprocessor 1128, in addition to its operating system functions, enables execution of software applications on the mobile device 1100. A predetermined set of software applications that control basic device operations, such as a voice communications module 1130A and a data communications module 1130B, may be installed on the mobile device 1100 during manufacture. In addition, a personal information manager (PIM) application module 1130C may also be installed on the mobile device 1100 during manufacture. The PIM application is in some embodiments capable of organizing and managing data items, such as e-mail, calendar events, voice mails, appointments, and task items. The PIM application is also in some embodiments capable of sending and receiving data items via a wireless network 1110. In some embodiments, the data items managed by the PIM application are seamlessly integrated, synchronized and updated via the wireless network 1110 with the device user's corresponding data items stored or associated with a host computer system.

Additional software modules, illustrated as another software module 1130N, may be installed during manufacture.

Communication functions, including data and voice communications, are performed through the communication subsystem 1170, and possibly through the short-range communications subsystem 1102. The communication subsystem 1170 includes a receiver 1150, a transmitter 1152, a GPS receiver 1162, and one or more antennas, illustrated as a receive antenna 1154, a transmit antenna 1156, and a GPS antenna 1164. In addition, the communication subsystem 1170 also includes a processing module, such as a digital signal processor (DSP) 1158, and local oscillators (LOs) 1160. The communications subsystem 1170 is used to communicate with a network. The demapping methods described with reference to the foregoing figures are implemented in the communications subsystem 1170, such as in the DSP 1158.

The specific design and implementation of the communication subsystem 1170 is dependent upon the communication network in which the mobile device 1100 is intended to operate. For example, the communication subsystem 1170 of the mobile device 1100 may be designed to operate with the Mobitex™, DataTAC™ or General Packet Radio Service (GPRS) mobile data communication networks and also designed to operate with any of a variety of voice communication networks, such as Advanced Mobile Phone Service (AMPS), Time Division Multiple Access (TDMA), Code Division Multiple Access (CDMA), Personal Communications Service (PCS), Global System for Mobile Communications (GSM), etc. Examples of CDMA include 1X and 1x EV-DO. The communication subsystem 1170 may also be designed to operate with an 802.11 Wi-Fi network, and/or an 802.16 WiMAX network. Other types of data and voice networks, both separate and integrated, may also be utilized with the mobile device 1100.

Network access may vary depending upon the type of communication system. For example, in the Mobitex™ and DataTAC™ networks, mobile devices are registered on the network using a unique Personal Identification Number (PIN) associated with each device. In GPRS networks, however, network access is typically associated with a subscriber or user of a device. A GPRS device therefore typically has a UICC, in order to operate on a GPRS network.

When network registration or activation procedures have been completed, the mobile device 1100 may send and receive communication signals over the communication network 1110. Signals received from the communication network 1110 by the receive antenna 1154 are routed to the receiver 1150, which provides for signal amplification, frequency down conversion, filtering, channel selection, etc., and may also provide analog to digital conversion. Analog-to-digital conversion of the received signal allows the DSP 1158 to perform more complex communication functions, such as constellation demapping (e.g. via the methods described above) and decoding. In a similar manner, signals to be transmitted to the network 1110 are processed (e.g., modulated and encoded) by the DSP 1158 and are then provided to the transmitter 1152 for digital to analog conversion, frequency up conversion, filtering, amplification and transmission to the communication network 110 (or networks) via the transmit antenna 1156.

In addition to processing communication signals, the DSP 1158 provides for control of the receiver 1150, the transmitter 1152, and the GPS receiver 1162. For example, gains applied to communication signals in the receiver 1150 and the transmitter 1152 may be adaptively controlled through automatic gain control algorithms implemented in the DSP 1158.

In a data communication mode, a received signal, such as a text message or downloaded web page, is processed by the communication subsystem 1170 and is input to the microprocessor 1128. The received signal is then further processed by the microprocessor 1128 for an output to the display 1126, or alternatively to some other auxiliary I/O devices 1106. A device user may also compose data items, such as e-mail messages, using the keyboard 1114 and/or some other auxiliary I/O device 1106, such as a touchpad, a rocker switch, a thumb-wheel, or some other type of input device. The composed data items may then be transmitted over the communication network 1110 via the communication subsystem 1170.

In a voice communication mode, overall operation of the device is substantially similar to the data communication mode, except that received signals are output to a speaker 1111, and signals for transmission are generated by a microphone 1112. Alternative voice or audio I/O subsystems, such as a voice message recording subsystem, may also be implemented on the mobile device 1100. In addition, the display 1126 may also be utilized in voice communication mode, for example, to display the identity of a calling party, the duration of a voice call, or other voice call related information.

Location determination using GPS technology involves receiving GPS signals from GPS satellites 1166 on the antenna 1164. The GPS signals are received using the GPS receiver 1162 and processed by the DSP 1158. Typically, GPS signals from at least four satellites are processed. Further details of GPS are known in the art and are omitted for simplicity.

The short-range communications subsystem 1102 enables communication between the mobile device 1100 and other proximate systems or devices, which need not necessarily be similar devices. For example, the short range communications subsystem may include an infrared device and associated circuits and components, or a Bluetooth™ communication module to provide for communication with similarly-enabled systems and devices.

Although the foregoing has been described with reference to certain specific embodiments, various modifications thereof will be apparent to those skilled in the art without departing from the scope of the claims appended hereto.

Bibliographic information for references [1] to [4] mentioned in the foregoing description:

[1] "Physical Channels and Modulation, Section 7.1 Modulation mapper", 3GPP Standard TS 36.211 V9.1.0, p.p. 79-81 March 2010.

[2] "Spreading and Modulation Section 5.1.1 Modulation mapper", 3GPP Standard TS 25.213 V9.2.0, p.p. 26-28, October 2010.

[3] "Unified High-Speed Wireline-Based Home Networking Transceivers - System Architecture and Physical Layer Specification, Section 7.1.4.3.1.1 Constellations for even number of bits", ITU-T Standard G.9960, p.p. 86-88, December 2011.

[4] "Very High Speed Digital Subscriber Line Transceivers 2 (VDSL2), Section 10.3.3.2.1 Even values of b", ITU-T Standard G.993.2, pg. 88, December 2011.

**Claims**

1. A method of computing a reliability value for a bit of a received symbol value $y$ (119) associated with a constellation; the method comprising:

   computing the reliability value by obtaining a first minimum distance value, the first minimum distance value being a function of an absolute magnitude of an initial value associated with the bit, and combining the first minimum distance value with a second minimum distance value, the second minimum distance value being a function of a distance between the received symbol value $y$ (119) and a symbol $x_{\hat{b}}$ in the constellation corresponding to a most likely pattern of bits transmitted given the received symbol value $y$ (119).

2. The method of claim 1, wherein the second minimum distance value is equal to the distance between the received symbol value $y$ (119) and the symbol $x_{\hat{b}}$ in the constellation corresponding to the most likely pattern of bits transmitted given the received symbol value $y$ (119).

3. The method of claim 1 or claim 2, wherein said combining the first minimum distance value with the second minimum distance value comprises either subtracting the first minimum distance value from the second minimum distance value or subtracting the second minimum distance value from the first minimum distance value.

4. The method of any one of claims 1 to 3, further comprising:

   receiving a wireless signal from a wireless channel (108);
   obtaining the received symbol value $y$ (119) from the wireless signal;
   performing decoding using the reliability value.

5. The method of any one of claims 1 to 4, wherein the constellation is square QAM or rectangular QAM, wherein the reliability value is computed as part of demapping, and wherein the demapping is performed by decomposing the QAM constellation into two independent PAM constellations representing an in-phase and a quadrature-phase signal respectively, and independently demapping each of the two independent PAM constellations.

6. The method of any one of claims 1 to 5, further comprising: obtaining a hard decision representing the most likely pattern of bits transmitted given the received symbol value $y$ (119), and computing the second minimum distance value by directly computing the distance between the received symbol value $y$ (119) and the symbol $x_{\hat{b}}$ in the constellation corresponding to the hard decision.

7. The method of any one of claims 1 to 6, wherein the constellation comprises a set of constellation points having a minimum distance of $2d$ between a pair of the constellation points, and wherein the first minimum distance value is equal to $d$ plus the absolute magnitude of the initial value.

8. The method of any one of claims 1 to 6, wherein the constellation comprises a set of constellation points having a minimum distance of $2d$ between a pair of the constellation points, the received symbol value $y$ (119) represents m bits (116) that were transmitted using a modulation scheme of the constellation; the method further comprising:

   obtaining m initial values $y_0, y_1,..., y_{m-1}$ from the received symbol value $y$, one for each of the $m$ bits (116), the initial value being a k$^{th}$ one, $y_k$, of the m initial values;
   computing the first minimum distance value as $d + |y_k|$, where $|y_k|$ is the absolute magnitude of the initial value;
   computing the second minimum distance value as a value equal to the distance between the received symbol value $y$ (119) and the symbol $x_{\hat{b}}$ in the constellation corresponding to the most likely pattern of bits transmitted given the received symbol value $y$ (119).

9. The method of claim 8, further comprising computing the second minimum distance value as $| y_{m-1} | -d |$.

10. The method of claim 8 or claim 9, wherein Gray coding is used in the constellation, and wherein said obtaining m initial values $y_0, y_1,..., y_{m-1}$ from the received symbol value $y$ comprises:

selecting the received symbol value $y$ as a first initial value $y_0$;
for $k = 1,...,m-1$, computing a $k^{th}$ initial value, $y_k$, as $y_k = 2^{m-k} d- |y_{k-1}|$.

11. The method of claim 8 or claim 9, wherein natural coding is used in the constellation, and wherein said obtaining m initial values $y_0, y_1,..., y_{m-1}$ from the received symbol value $y$ (119) comprises:

selecting the received symbol value $y$ (119) as a first initial value $y_0$;

for $k = 1,...,m - 1$, computing a $k^{th}$ initial value, $y_k$, as $y_k = \begin{cases} y_{k-1} - 2^{m-k} d, & y_{k-1} \geq 0 \\ y_{k-1} + 2^{m-k} d, & y_{k-1} < 0 \end{cases}$.

12. The method of any one of claims 8 to 11, further comprising computing m reliability values, one of the m reliability values being said reliability value; wherein the m reliability values are computed by, for $i = 0,..., m - 1$, computing an $i^{th}$ reliability value including computing $d + | y_i |$ to obtain an $i^{th}$ first minimum distance value, and combining the $i^{th}$ first minimum distance value with the second minimum distance value.

13. The method of claim 12, wherein the initial values are soft-sliced values, wherein the constellation is either a Pulse Amplitude Modulation (PAM) constellation or a Quadrature Amplitude Modulation (QAM) constellation, and wherein each one of the m reliability values is a Log Likelihood Ratio (LLR) computed as:

$$L(b_i) = \frac{\min\limits_{\bar{b}, b_i = 1} | y - x_{\vec{b}} |^2 - \min\limits_{\bar{b}, b_i = 0} | y - x_{\vec{b}} |^2}{k} ,$$

wherein the $i^{th}$ first minimum distance value is used to compute one of $\min\limits_{\bar{b}, b_i = 1} | y - x_{\vec{b}} |$ and

$\min\limits_{\bar{b}, b_i = 0} | y - x_{\vec{b}} |$, and wherein the second minimum distance value is used to compute the other of

$\min\limits_{\bar{b}, b_i = 1} | y - x_{\vec{b}} |$ and $\min\limits_{\bar{b}, b_i = 0} | y - x_{\vec{b}} |$, and where $\bar{b}$ is a bit vector of $m$ bits, $x_{\vec{b}}$ is a symbol in the constellation associated with the bit vector $\bar{b}$, $\bar{b}, b_i = 0$ is a set of all possible bit vectors whose $i^{th}$ bit is 0, $\bar{b}, b_i = 1$ is

a set of all possible bit vectors whose $i^{th}$ bit is 1, $k$ is a scaling factor, $| y - x_{\vec{b}} |$ represents the absolute value of the difference between the received symbol value $y$ and the symbol $x_{\vec{b}}$, $\min\limits_{\bar{b}, b_i = 1} | y - x_{\vec{b}} |$ is a minimum of the set of values $| y - x_{\vec{b}} |$ for $\bar{b}, b_i = 1$ and $\min\limits_{\bar{b}, b_i = 0} | y - x_{\vec{b}} |$ is a minimum of the set of values $| y - x_{\vec{b}} |$

for $\bar{b}, b_i = 0$.

14. An apparatus in a digital communications system for implementing the method of any one of claims 1 to 13.

**15.** A computer readable medium having stored thereon computer executable instructions that, when executed, cause an apparatus to implement the method of any one of claims 1 to 13.

**FIG. 1**

8-PAM

FIG. 2

8-PAM

FIG. 3

16-QAM

FIG. 4

**FIG. 5**

**FIG. 6**

EP 2 779 552 A1

Start

Obtain received symbol value $y$ ～710

Obtain the hard decision corresponding to the received symbol value $y$ ～712

714 ⌐
Soft slice the received symbol value $y$ to obtain $m$ soft sliced values $y_0, y_1, \ldots, y_{m-1}$

718 ⌐
Compute $d+|y_i|$ for $i=0,1,\ldots,m-1$

716 ⌐
Compute $|y-\hat{x_b}|$

Use results of computations in steps 716 and 718 in computing the LLR ～720

End

## FIG. 7

Start

Obtain received symbol value $y$ ~810

Soft slice the received symbol value $y$ to obtain $m$ soft sliced values $y_0, y_1, ..., y_{m-1}$ ~812

814 — Compute $|y-x_{\hat{b}}| = ||y_{m-1}| - d|$

816 — Compute $d + |y_i|$ for $i = 0, 1, ..., m-1$

Use results of computations in steps 814 and 816 in computing the LLR ~818

End

# FIG. 8

**FIG. 9**

8-PAM

| $S_1$ | $S_2$ | $S_3$ | $S_4$ | $S_5$ | $S_6$ | $S_7$ | $S_8$ |
|---|---|---|---|---|---|---|---|
| 100 | 101 | 110 | 111 | 000 | 001 | 010 | 011 |
| $-6d$ | $-4d$ | $-2d$ | $0$ | $2d$ | $4d$ | $6d$ | |

**FIG. 10**

EP 2 779 552 A1

**Step 1:**

$$\min|y-x_b|=d+|y_0|$$
$$\overrightarrow{b}:b_0=0$$

$$y_0=y$$

| 100 | 101 | 110 | 111 | | 000 | 001 | 010 | 011 |
|-----|-----|-----|-----|---|-----|-----|-----|-----|

$-6d$  $-4d$  $-2d$  $0$  $2d$  $4d$  $6d$

**Step 2:**

$$\min|y-x_b|=d+|y_1|$$
$$\overrightarrow{b}:b_1=0$$

$$y_1=\begin{array}{l} y_0-4d, y_0 \geq 0 \\ y_0+4d, y_0 < 0 \end{array}$$

| 000 | 001 | | 010 | 011 |
|-----|-----|---|-----|-----|
| 100 | 101 | | 110 | 111 |

$-2d$  $0$  $2d$

**Step 3:**

$$\min|y-x_b|=d+|y_2|$$
$$\overrightarrow{b}:b_2=0$$

$$y_2=\begin{array}{l} y_1-2d, y_1 \geq 0 \\ y_1+2d, y_1 < 0 \end{array}$$

| 000 | 001 |
|-----|-----|
| 010 | 011 |
| 100 | 101 |
| 110 | 111 |

$0$

$$\min_{\overrightarrow{b}:b_0=1}|y-x_b|=\min_{\overrightarrow{b}:b_1=1}|y-x_b|=\min_{\overrightarrow{b}:b_2=1}|y-x_b|=\|y_2|-d|$$

**FIG. 11**

|     | 111 | 110 | 100 | 101 | 001 | 000 | 010 | 011 |
|-----|-----|-----|-----|-----|-----|-----|-----|-----|
| 011 | 101111 ● | 101101 ● | 100101 ● | 100111 ● | 000111 ● | 000101 ● | 001101 ● | 001111 ● |
| 010 | 101110 ● | 101100 ● | 100100 ● | 100110 ● | 000110 ● | 000100 ● | 001100 ● | 001110 ● |
| 000 | 101010 ● | 101000 ● | 100000 ● | 100010 ● | 000010 ● | 000000 ● | 001000 ● | 001010 ● |
| 001 | 101011 ● | 101001 ● | 100001 ● | 100011 ● | 000011 ● | 000001 ● | 001001 ● | 001011 ● |
| 101 | 111011 ● | 111001 ● | 110001 ● | 110011 ● | 010011 ● | 010001 ● | 011001 ● | 011011 ● |
| 100 | 111010 ● | 111000 ● | 110000 ● | 110010 ● | 010010 ● | 010000 ● | 011000 ● | 011010 ● |
| 110 | 111110 ● | 111100 ● | 110100 ● | 110110 ● | 010110 ● | 010100 ● | 011100 ● | 011110 ● |
| 111 | 111111 ● | 111101 ● | 110101 ● | 110111 ● | 010111 ● | 010101 ● | 011101 ● | 011111 ● |

**FIG. 12**

Rectangular or
Square QAM
Constellation
Mapper

$\vec{b}$

Bit Separation

In-Phase  Quadraphase

PAM
Constellation
Mapper

PAM
Constellation
Mapper

$x_{\vec{b}}$

Rectangular or
Square QAM
Constellation
Demapper

$y$

Symbol
Decomposition

In-Phase  Quadraphase

PAM
Constellation
Demapper

PAM
Constellation
Demapper

Bit
Collection

$L(b)$

# FIG. 13

Start

Obtain $m$ initial values from the received symbol value $y$ ~1402

Obtain $m$ reliability values by, for $i=0, ..., m-1$, computing an $i^{th}$ reliability value including computing $d+|y_i|$ and combining this with another minimum distance value equal to a distance between the received symbol value $y$ and the symbol in the constellation corresponding to a most likely pattern of bits transmitted given the received symbol value. ~1404

End

# FIG. 14

Start

Obtaining a first minimum distance value, the
first minimum distance value being a function of
an absolute magnitude of an initial value
associated with the bit

~1502

Combining the first minimum distance value with
a second minimum distance value, the second
minimum distance value being a function of a
distance between the received symbol value $y$
and a symbol in the constellation corresponding
to a most likely pattern of bits transmitted given
the received symbol value $y$

~1504

End

## FIG. 15

<u>1204</u>

<u>1202</u>

Channel

Constellation
Demapper
<u>1206</u>

## FIG. 16

**FIG. 17**

EP 2 779 552 A1

Europäisches
Patentamt

European
Patent Office

Office européen
des brevets

## EUROPEAN SEARCH REPORT

Application Number

EP 13 15 9254

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 246 419 A1 (MOTOROLA INC [US]) 2 October 2002 (2002-10-02) * paragraphs [0010], [0011], [0013], [0016] - [0026]; figure 3 * ----- | 1-15 | INV. H04L25/06 |
| X | US 6 078 626 A (RAMESH RAJARAM [US]) 20 June 2000 (2000-06-20) * column 2, lines 57-63; figure 3 * * column 4, line 36 - column 5, line 64 * * column 6, line 56 - column 7, line 10 * ----- | 1-15 | |
| X | US 2011/019726 A1 (CHAPPAZ DAVID F [GB]) 27 January 2011 (2011-01-27) * paragraphs [0087] - [0091] * ----- | 1-15 | |

TECHNICAL FIELDS
SEARCHED    (IPC)

H04L

The present search report has been drawn up for all claims

| Place of search | Date of completion of the search | Examiner |
|---|---|---|
| Munich | 31 July 2013 | Agudo Cortada, E |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**ANNEX TO THE EUROPEAN SEARCH REPORT**
**ON EUROPEAN PATENT APPLICATION NO.**                    EP 13 15 9254

This annex lists the patent family members relating to the patent documents cited in the above-mentioned European search report.
The members are as contained in the European Patent Office EDP file on
The European Patent Office is in no way liable for these particulars which are merely given for the purpose of information.

31-07-2013

| Patent document cited in search report | | Publication date | Patent family member(s) | Publication date |
|---|---|---|---|---|
| EP 1246419 | A1 | 02-10-2002 | CA 2373543 A1<br>CN 1375953 A<br>EP 1246419 A1<br>JP 4084059 B2<br>JP 2002330188 A<br>KR 20020072790 A<br>US 2002159535 A1 | 12-09-2002<br>23-10-2002<br>02-10-2002<br>30-04-2008<br>15-11-2002<br>18-09-2002<br>31-10-2002 |
| US 6078626 | A | 20-06-2000 | NONE | |
| US 2011019726 | A1 | 27-01-2011 | DE 112009000636 T5<br>US 2011019726 A1<br>WO 2009115795 A2 | 17-02-2011<br>27-01-2011<br>24-09-2009 |

EPO FORM P0459

For more details about this annex : see Official Journal of the European Patent Office, No. 12/82

**EP 2 779 552 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Physical Channels and Modulation, Section 7.1 Modulation mapper. *3GPP Standard TS 36.211,* March 2010, 79-81
- Spreading and Modulation Section 5.1.1 Modulation mapper. *3GPP Standard TS 25.213,* October 2010, 26-28
- Unified High-Speed Wireline-Based Home Networking Transceivers - System Architecture and Physical Layer Specification, Section 7.1.4.3.1.1 Constellations for even number of bits. *ITU-T Standard G.9960,* December 2011, 86-88
- Very High Speed Digital Subscriber Line Transceivers 2 (VDSL2), Section 10.3.3.2.1 Even values of b. *ITU-T Standard G.993.2,* December 2011, 88